# EUROPEAN PATENT APPLICATION

(11) **EP 1 818 797 A2**
(43) Date of publication of application: **15.08.2007**
(21) Application number: 06253539.8
(22) Date of filing: 06.07.2006
(51) Int. Cl.: G06F 3/06

(54) **Storage system and storage control method**

(30) Priority: 19.01.2006 JP 2006011093
(71) Applicant: HITACHI, LTD., Chiyoda-ku Tokyo 100-8280 (JP)
(72) Inventor: Morishita, Noboru c/o Hitachi, Ltd. I.P. Group, Chiyoda-ku Tokyo 100-8220 (JP); Eguchi, Yoshiaki c/o Hitachi, Ltd. I.P. Group, Chiyoda-ku Tokyo 100-8220 (JP)
(74) Representative: Hodsdon, Stephen James

(57) **Abstract**

A pool (4), which has multiple pool regions which are storage regions capable of being dynamically allocated or released, is configured from a plurality of pool groups (40A, 40B, 40C, 40D) and a pool free region group (41) which is common to the plurality of pool groups. Each of the pool groups is related to each storage control function of a storage system (2a). When a used value of a certain pool group exceeds the threshold, a storage controller (20) of the storage system selects a pool free region appropriate for the pool group from the pool free region group (41), and allocates the selected pool free region to the pool group.

## Description

This application relates to and claims priority from Japanese Patent Application No. 2006-11093, filed on January 19, 2006 the entire disclosure of which is incorporated herein by reference.

The present invention relates to a technology for allocating storage regions in a storage system.

The technologies disposed in, for example, Japanese Patent Application Laid-Open No. 2002-222061 and Japanese Patent Application Laid-Open No. 2004-234058 are known.

Japanese Patent Application Laid-Open No. 2002-222061 describes a system for managing a storage pool in a storage system. When a storage region used by a user is created on a storage device, a storage region with a specific attribute is selected from among the pool regions in accordance with a volume creation policy which is set beforehand, and a specified volume is created, taking that the selected region has been already used.

Japanese Patent Application Laid-Open No. 2004-234058 describes a system for managing a storage pool in a storage network system. A management device connected to a local network has local storage pool information inside the network managed by the management device, and global storage pool information related to an external network. For a request for the use of the storage pool, which is sent from a host computer managed by the management device, the management device allocate storage regions to local storage pools first, and, for a request for allocating storage pools, which is sent from a management device of other network, the abovementioned management device allocates storage region to global storage pools first.

There is a technology in which physical storage regions of a storage device are managed, and the physical storage regions are allocated to storage regions, which are allocated logically to hosts, when storage region is required, i.e. when a writing operation is performed at the host. In the present specification, the individual storage region which is dynamically allocated or released is called "pool region," and the technology used for such purpose is called "storage pool management technology." According to the storage pool management technology, it is only necessary to allocate a pool region to a logical region to be used, thus there is an advantage in this technology that the size of a logical storage region can be set larger than the size of a physical storage region.

Further, there is a storage system installed with a plurality of functions (for example, functions that can executed a plurality of types of storage control processing). For example, there is a storage system installed with other function in addition to a function for accessing a storage device in accordance with an IO command (a write command or read command for writing or reading data) from a host. As the function, there is, for example, a data replication function. According to the data replication function, replication of data is performed from paired primary logical volumes (primary volumes) to a secondary logical volume (secondary volume).

In such types of storage systems, the following method is possible as a method for applying the storage pool management technology.

Specifically, a pool region group is prepared for each function. Moreover, a group having a plurality of pool regions (referred to as "pool free region" hereinafter) that can be dynamically allocated to the pool region groups is prepared (referred to as "pool free region group" hereinafter) for each of the pool region groups.

However, according to this method, pool capacity (storage capacities of the plurality of pool regions) is different for each function. For this reason, there is a problem that waste is incurred in terms of the use of the storage regions, such that pool free regions of some functions are wasted and, on the other hand, plenty of pool free regions of other functions exist.

Moreover, when minimum pool allocation unit capacities (i.e. the sizes of pool regions) required by each function are different, the following countermeasures may be required: (1) a pool allocation unit corresponding to the required minimum capacity is prepared, and, when capacities larger than the minimum capacities are required, a plurality of pool allocation units are allocated; (2) different pool allocation units are prepared beforehand, and a pool allocation unit is selected in order to satisfy the required capacity; and the like. Therefore, in the countermeasure (1), the functions requiring large capacities have a problem that the processing time for allocating or releasing pool regions (referred to as "pool allocation/release" hereinafter) is increased and performance involved in the pool allocation/release processing is deteriorated. Further, in the countermeasure (2), when any deviation occurs in the usage between allocation units of different capacities, even when only small-capacity pool regions are required, and when all of the small-capacity pool regions are used, there is a problem that large-capacity pool regions are allocated excessively, thereby reducing efficiency in the use of the storage capacity.

As another method for applying the storage pool management technology, there is, for example, a method for managing multiple pool regions by means of a single pool group in order to increase efficiency in the use of the multiple pool regions.

However, according to this method, when losing control of maintaining the storage system, or when a failure occurs in information for managing a pool region or a logical volume having a plurality of pool regions, all of the information items stored in these plurality of pool regions may be lost at once. Particularly, when using a specific data replication function (for example, a system in which a primary volume and a secondary volume do not share data), there is a problem that data of both primary volume and secondary volume may be lost at once due to the failures related to the pool region groups, thus this function cannot be used for the purpose of backup.

An object of the present invention, therefore, is to provide a storage system in which a storage region, which is consolidated by a pool, is effectively used by means of a plurality of functions.

Another object of the present invention is to limit the extent of the impact of loss of data even when the pool becomes unavailable.

Further objects of the present invention will become clear in the following description.

The storage system according to a general aspect of the present invention is capable of communicating with one or a plurality of external devices which issue IO commands, and comprising a plurality of storage control functions. This storage system comprises: a pool having multiple pool regions which are storage regions which are dynamically allocated or released; a plurality of virtual volumes which are a plurality of virtual storage devices which are recognized by the external devices and serve as destinations of the IO commands sent from the external devices; and a storage controller which receives the IO commands sent from the external devices to the virtual volumes, allocates one or more pool regions inside the pool to the virtual volumes, and writes or reads data corresponding to the received IO commands with respect to the allocated one or more pool regions. The pool comprises a plurality of pool groups which are related to the plurality of storage control functions respectively, and a pool free region group. Each of the plurality of pool groups has a plurality of pool regions. The pool free region group has a plurality of pool free regions which are pool regions dynamically allocated or released to any of the plurality of pool groups, and is a group common to the plurality of pool groups. The storage controller comprises a free allocation portion for allocating the pool free regions inside the common pool free region group to, of the plurality of pool groups, pool groups which satisfy a predetermined allocation condition. For example, the pool free regions can be allocated only as needed.

In a first aspect, the storage system can comprise a storage area which can store a used upper limit which is an upper limit of a value related to capacity of storage capacities of the pool groups, the capacity being actually in use. When a used value of a certain pool group of the plurality of pool groups (for example, usage rate or used capacity) exceeds the used upper limit stored in the storage area of the certain pool group, the free allocation portion can allocate at least one pool free region to the certain pool group.

In a second aspect, the storage controller performs management on whether each of the pool regions in each of the pool groups has been already allocated or not, as a separate operation from management of pool regions in other pool groups.

In a third aspect, the free allocation portion can select the pool free regions to be allocated to the pool groups in accordance with a predetermined policy.

In a fourth aspect, according to the third aspect, the pool region may be a storage region of a certain logical volume of a plurality of logical volumes which are set using physical storage resources that a plurality of RAID groups have. Each of the RAID groups may comprise one or a plurality of disk drives. Each of the disk drives may be accessed from the storage controller via each drivepath. The free allocation portion can preferentially allocate pool free regions in the RAID groups and/or drive paths to pool groups, the pool free regions being different from the pool regions that have been already allocated to the pool groups.

In a fifth aspect, according to the fourth aspect, the free allocation portion can preferentially search and allocate pool free regions which are different from the allocated pool regions in terms of the drive paths, than pool free regions which are different from the allocated pool regions in terms of the RAID groups.

In a sixth aspect, according to the third aspect, the one or plurality of external devices may be a host computer and an external storage system. The external storage system may also have the pool regions. The plurality of storage control functions may include an IO processing function for dynamically allocating pool regions in accordance with an IO command from the host computer, and other storage control functions. The free allocation portion can preferentially allocate pool free regions inside the storage system to pool groups which are related to the IO processing function, and preferentially allocate pool regions inside the external storage system as pool free regions to pool groups corresponding to the other storage control functions.

In a seventh aspect, the storage controller can further comprise a pool region withdrawal portion for causing allocated pool regions to withdraw from a pool group of the plurality of pool groups, which satisfies a predetermined deletion condition, to the common pool free region group.

In an eighth aspect, according to the seventh aspect, the storage system can comprise a storage area which can store a used lower limit which is a lower limit of a value related to capacity of storage capacities of the pool groups, the capacity being actually in use. When a used value of a certain pool group of the plurality of pool groups is lower than the used lower limit stored in the storage area of the certain pool group, the pool region withdrawal portion can cause at least one pool region to withdraw from the certain pool group to the pool free region group.

In a ninth aspect, according to the eighth aspect, when the low value state lasts for a certain period of time, the pool region withdrawal portion can cause at least one pool region to withdraw from the certain pool group to the pool free region group.

In a tenth aspect, according to the seventh aspect, the pool region withdrawal portion can move data, which is stored in the pool region to be withdrawn, to other pool region inside the certain pool group.

In an eleventh aspect, the plurality of storage control functions may include a function which uses two or more virtual volumes of the plurality of virtual volumes. Different pool groups may be related to the two or more virtual volumes respectively.

In a twelfth aspect, the one or plurality of external devices may include an external storage system. The storage controller can manage a storage region of the external storage system as a pool region of the storage system, and allocate the pool region of the external storage system to a certain pool group of the plurality of pool groups.

In at least one aspect, when selecting required storage regions to be allocated from pool free regions to pool groups, the storage regions, in which the connecting paths from the storage controller to the storage device are different, and the storage device itself is different, may be placed priority over storage regions which have been already allocated to pool groups.

Each of the abovementioned portions can be restated as "means." Each portion or each means can be realized by means of hardware (for example, a circuit), computer programs, or a combination thereof (for example, one or a plurality of CPUs which execute the computer programs by reading them). Each of the computer programs can be read from a storage resource (for example, memory) installed in a computer machine. The storage resource can be installed using a recording medium such as a CD-ROM, DVD (Digital Versatile Disk) or the like, or can be downloaded through a communication network such as the Internet, LAN, or the like.

### Brief Description of The drawings

Fig. 1 is an explanatory diagram showing an outline of an embodiment of the present invention;
Fig. 2 is a figure showing a configuration example of the storage system;
Fig. 3 is a figure showing an example of pool management information;
Fig. 4 is a figure showing an example of pool state management information;
Fig. 5 is a figure showing an example of a format of a pool VOL number list;
Fig. 6 is a figure showing an example of pool group management information;
Fig. 7 is a figure showing an example of an outline of pool-region-inside-pool group allocation management information;
Fig. 8 is a figure showing an example of free status management information;
Fig. 9 is a figure showing an example of VOL management information;
Fig. 10 is a figure showing an example of pool use requirements;
Fig. 11 is a figure showing an example of external VOL information;
Fig. 12 is a figure showing an example of path information;
Fig 13 is a figure showing an example of an outline of a management system of an external VOL;
Fig. 14 is a figure showing an example of a flow of processing performed by a pool creation/VOL registration program;
Fig. 15 is a figure showing an example of a flow of selecting a pool VOL candidate;
Fig. 16 is a figure showing an example of a flow of registering a pool VOL;
Fig. 17 is a figure showing an example of a flow of processing performed by a pool group creation program;
Fig. 18 is a figure showing an example of selecting a pool group addition region candidate;
Fig. 19 is a figure showing an example of adding a pool group region;
Fig. 20 is a figure showing an example of a flow of processing performed by an automatic capacity expansion program;
Fig. 21 is a figure showing an example of a flow of processing performed by a pool group deletion program;
Fig. 22 is a figure showing an example of the first half of processing performed by an automatic capacity deletion program;
Fig. 23 is a figure showing an example of the last half of the processing performed by the automatic capacity deletion program; and
Fig. 24 is a figure showing an example of a flow of processing performed by a data withdrawal program.

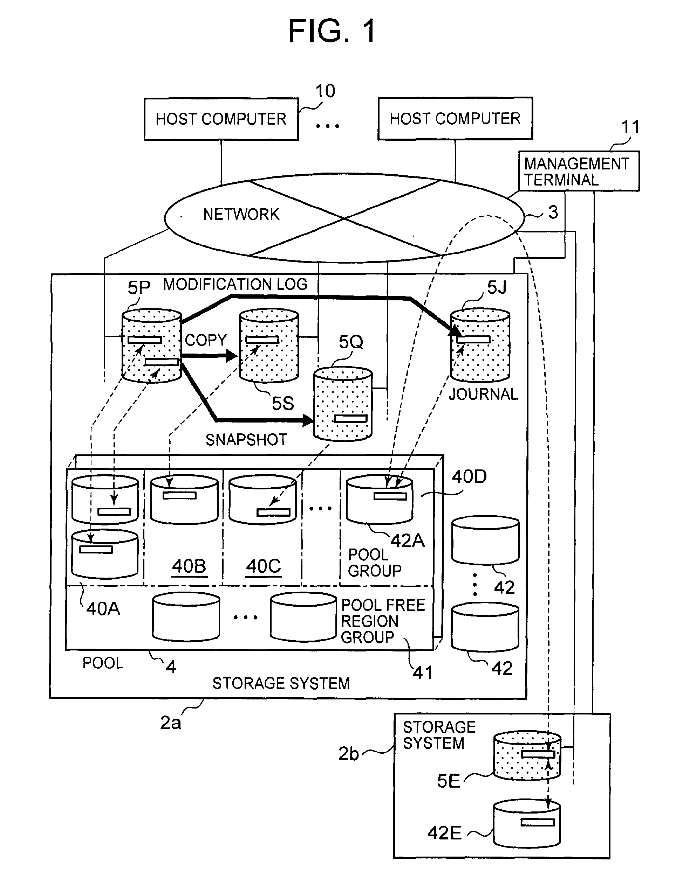

An explanatory diagram of an outline of an embodiment of the present invention is shown in Fig. 1. In the following explanation, like primary numbers are used to indicate the same elements (for example, "5" of "virtual volume 5"), and, when explaining by specifying individual elements, secondary reference characters are used to indicate the elements (for example, "E" of "virtual volume 5E").

One or a plurality of storage systems 2 (there are two systems, a storage system 2a and a storage system 2b, in the present embodiment) are connected to one or a plurality of host computers 10 via a network 3. Further, a management terminal 11 , which is used to change the structural states of the storage systems 2a, 2b or referring to the internal situation, is connected to the storage systems 2a, 2b directly or via the network 3 (either one of the connection systems may be used, or other connection scheme may be used).

The storage system 2a has actual volumes (tangible logical volumes) 42 and virtual volumes (intangible logical volumes; however, the host compute 10 can recognize them) 5. Storage regions of the virtual volumes 5 correspond to storage regions of the actual volumes 42 in a pool 4. The pool 4 can be configured with a pool group 40 and a pool free region group 41. Of the plurality of actual volume 42, an actual volume 42A corresponds to a virtual volume 5E of the external storage system 2b. An actual volume 42E in which an actual storage region exists is present in the external storage system 2b, and the virtual volume 5E corresponds to the actual volume 42. As a method of using the storage regions of the external storage system 2b in the storage system 2a, a pool group 40, which is configured with the actual volumes 42 only, may be created, and, when regions of the external storage system 2b are required, a virtual volume 5 may be defined to allocate the storage region of this virtual volume 5 from the created pool group 40. Virtual volumes do not have to be present in the external storage system 2b, in which case the actual volume 42E is recognized by a host device (for example, the storage system 2a in the present embodiment).

The storage system 2a can be configured with the certain number of actual volumes 42 of the plurality of the actual volumes 42. In other words, the pool 4 can be configured with numbers of pool regions. In the present embodiment, the pool region means an individual storage region which configures the actual volume 42 and can be dynamically allocated to or released from the virtual volume 5.

In this embodiment, one or a plurality of the pools 4 can be provided. A single pool 4 can be configured with a pool group 40 and a pool free region group 41, as described above. One or more of the pool groups 40 can be prepared for one function that the storage system 2a has. In this case, the pool 4 can be configured with the plurality of pool groups 40 and the pool free region groups 41 common to the plurality of pool groups 40.

Here, the pool group 40 means a group configured with a plurality of pool regions of numbers of pool regions configuring the pool 4. From the perspective of the pool group 40, the pool 4 can be referred to as a large group of pools.

The pool free region group 41 is a group configured with a plurality of pool free regions. The pool free region is one of the numbers of pool regions configuring the pool 4, and is a pool region which is dynamically allocated to or released from the pool groups 40. Specifically, the pool free region is a pool region which is not allocated directly to the virtual volumes 5, but allocated to any of the pool groups 40 first, and then allocated to the virtual volumes 5.

Various types of storage control processing are carried out by bringing out each of the functions that the storage system 2a has. The functions that the storage system 2a has include (in other words, types of executable storage control processing) four types of functions such as an IO processing function, volume copy function, snapshot function, and journal copy function. Four pool groups 40A through 40D are related respectively to these four functions.

The IO processing function is a function of processing an 10 command (a write command or read command for data) issued by the host computer 10. Specifically, for example, when a storage controller (not shown) of the storage system 2a receives a write command and write target data specifying a virtual volume 5P, the storage controller temporarily can store the write target data in cache memory, allocate one or a plurality of pool regions having the size that can store the write target data, from a pool group 40A to the virtual volume 5P, read the write target data from the cache memory 205, and write the write target data into the one or plurality of allocated pool regions.

The volume copy function is a function which, when data is written into a certain primary virtual volume 5, writes the data into a secondary virtual volume which is paired with the virtual volume 5. Specifically, for example, when the storage controller writes data into the primary virtual volume 5P, the storage controller can allocate one or a plurality of pool regions having the size that can store the data, from a pool group 40B to the virtual volume 5S, and write the data into the one or plurality of allocated pool regions.

The snapshot function is a function of generating an image of a certain virtual volume 5 of a certain point of time (in other words, one or a plurality of pool regions corresponding to this virtual volume). Specifically, for example, when certain data inside a virtual volume 5P is modified to other data after a point of time when a snapshot is acquired (for example, a point of time when a snapshot acquisition command is received from the host computer 10), the storage controller can allocate one or a plurality of pool regions having the size that can store the unmodified data from a pool group 40C to a virtual volume 5Q, and write the unmodified data into the one or plurality of allocated pool regions.

The journal copy function is a function of, at asynchronous timing when data is written into a certain primary virtual volume 5, writing the data into a secondary virtual volume which his paired with the certain virtual volume 5. Specifically, for example, when the storage controller writes data into the primary virtual volume 5P, the storage controller can generate a journal which is a modified log (for example, information indicating the data itself and a data write sequence), allocate one or a plurality of pool regions having the size that can store the journal, from a pool group 40D to a virtual volume 5J, and write the journal into the one or plurality of allocated pool regions. Then the storage controller can transfer the data inside the journal to the virtual volume 5E of the external storage system 2b (or the actual volume 42E if there is no virtual volume 5E) at certain timing. Accordingly, a pool region of the actual volume 42E is allocated to a certain region of the virtual volume 5E, and the transferred data is written into the pool region.

As described above, in the storage system 2a the plurality of pool groups 40 corresponding respectively to the plurality of functions are prepared, and a single pool 4 can be configured with the plurality of pool groups 40 and the pool free region groups 41 common to the plurality of pool groups 40.

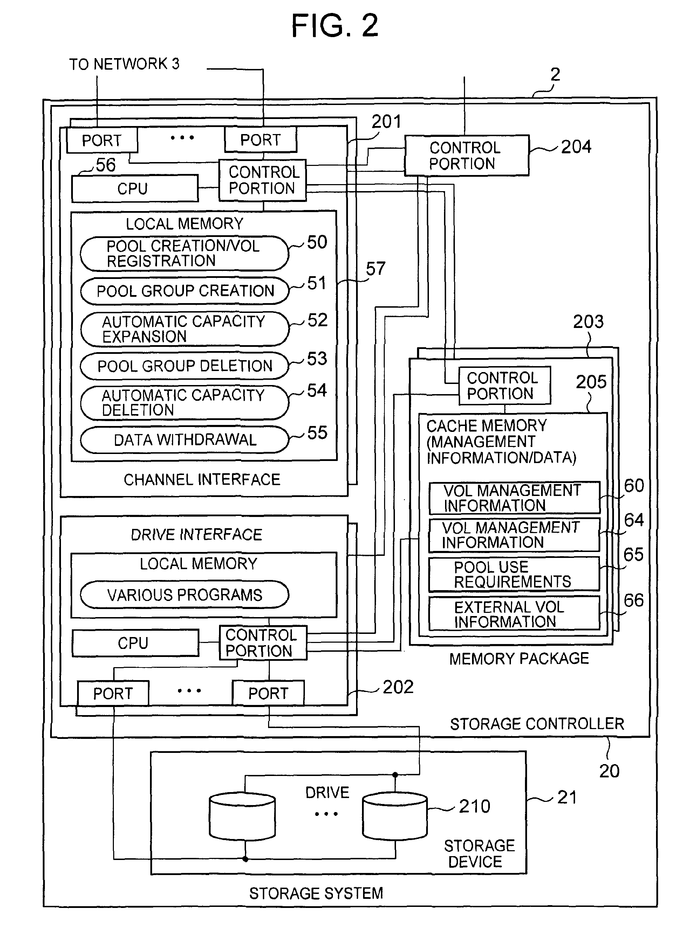

Fig. 2 shows a configuration example of the storage system 2. This configuration example can be applied to at least the storage system 2a of the storage systems 2a, 2b.

The storage system 2 comprises a storage device 21 for storing a disk drive 210, and a storage controller 20 for controlling an operation of the storage system 2. The storage controller 20 comprises a channel interface 201 for connecting the host compute 10 to the storage controller 20, a drive interface 202 for connecting the storage device 21 to the storage controller 20, a memory package 203, and a maintenance terminal 204.

One or a plurality of disk drives 210 are stored in the storage device 21. Each of the drives 210 has a plurality of input/output ports. A plurality of storage devices 21 may exist in the storage system 2. The disk drive 210 is a hard disk drive, but may be a drive for various storage media.

In the storage controller 20, the channel interface 201 for controlling data transfer between the host computer 10 and the cache memory 205, and the drive interface 202 for controlling data transfer between the cache memory 205 and the drive 210 are stored. The channel interface 201 can receive the IO commands or other requests from the host computer 10, and also can issue the IO commands to the external storage system 2b. The drive interface 202 may be, for example, paired with another one, and the pair is connected to the drive 210 of the storage device 21.

The channel interface 201 can comprise, for example, the input/output ports, local memory 57, a CPU 56, and a control portion for controlling data transfer. The local memory 57 can store various control programs (computer programs) and data. The control programs include, for example, a pool creation/VOL registration program 50, a pool group creation program 51, an automatic capacity expansion program 52, a pool group deletion program 53, an automatic capacity deletion program 54, and a data withdrawal program 55. Although the CPU is the main body of the processing performed by executing the various control programs by reading them, the control programs are considered as such main body of the processing in order to make the following explanations understandable.

The CPU 56 can read the various control programs such as the pool creation/VOL registration program 50, pool group creation program 51, automatic capacity expansion program 52, pool group deletion program 53, automatic capacity deletion program 54, and data withdrawal program 55 from the local memory 57 to execute these programs.

The drive interface 202 can also have the same configuration as the channel interface 201. The various control programs may be executed by the CPU of the channel interface 201 or the CPU of the drive interface 202. A plurality of the channel interfaces 201 and the drive interfaces 202 may exist in the storage system 2.

Also, the memory package 203 has the cache memory 205, and a control portion for controlling data transfer between the cache memory 205 and the drives 201, 202. The cache memory 205 can temporarily store data which is communicated between the host computer 10 and the disk drive 210. The cache memory 205 can further store various control information. The control information include, for example, pool management information 60, VOL management information 64, pool use requirements 65, and external VOL information 66. The control information may be stored in memory different from the cache memory 205, that is, memory shared by the channel interface 201 and drive interface 202. There may be a plurality of memory packages 203.

The maintenance terminal 204 is used to change the configuration of the storage system 2 or refer to the internal situation. Moreover, the maintenance terminal 204 relays instructions sent from the management terminal 11 to the storage system 2. The maintenance terminal 204 may be connected to at least either the channel interface 201 or the drive interface 202. The maintenance terminal 204 may comprise both an input/output console and a control console (may be a personal computer, for example), or comprise only control console without the input/output console (a so-called "motherboard," for example). The maintenance terminal 204 may be connected communicably to the management terminal 11.

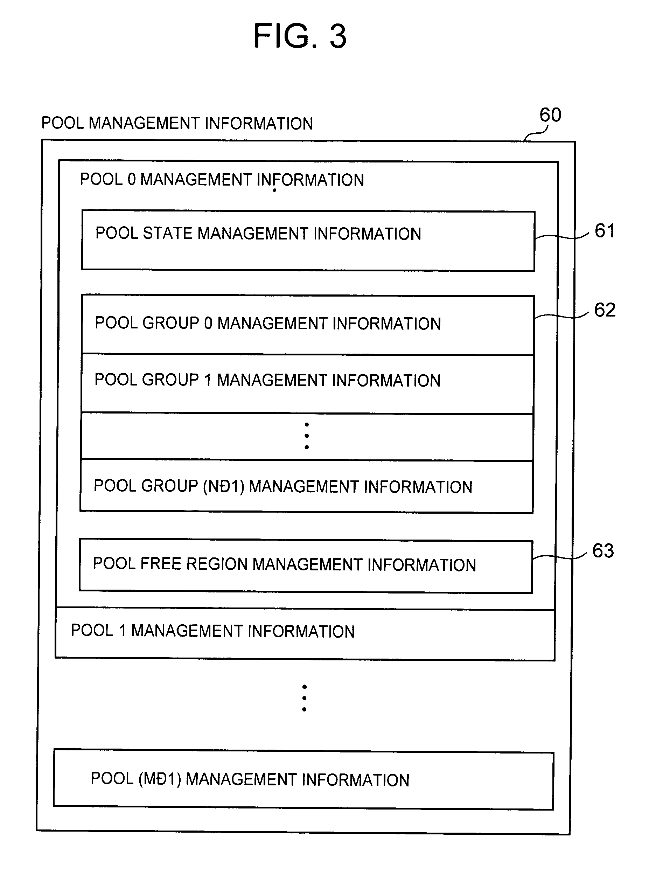

Fig. 3 shows an example of the pool management information 60 for managing the pool 4 of the storage system 2.

The pool management information items 60 exist as many as the number of pools 4 which can be defined by the storage system 2. When splitting a single storage system 2 and managing thus obtained storage systems as a plurality of independent storage subsystems, each unit is referred to as "logical partition," and a number applied to each of the logical partitions is referred to as "logical partition number." The number of pools 4 which can be defined by the storage system 2 may be the number of logical partitions which can be defined by the system. Each of the pool management information items 60 includes pool state management information 61 for managing the state of the pool groups 4 corresponding thereto, a plurality of pool group management information items 62 for respectively managing the states the plurality of pool groups 40 provided in the pool 4, and pool free region management information 63 for managing pool free regions which are not yet allocated to the pool groups 40.

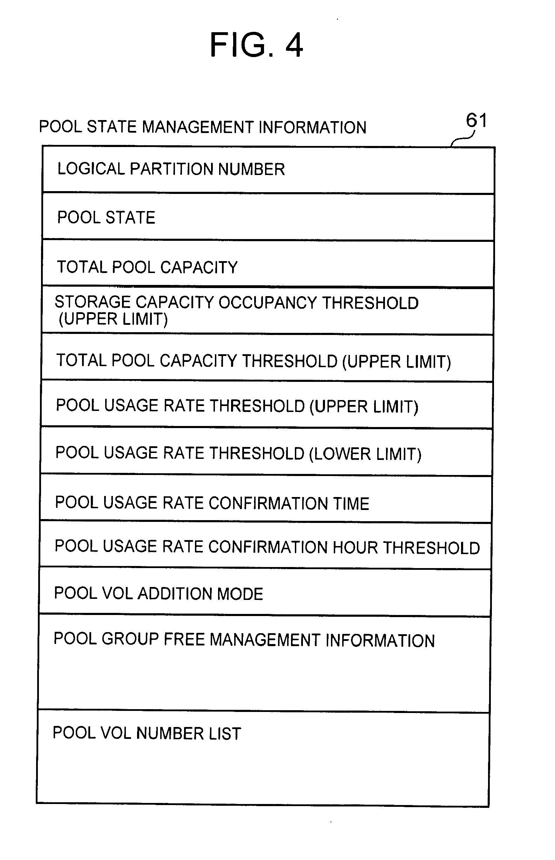

Fig. 4 shows an example of the pool state management information 61. Hereinafter, the pool 4 corresponding to the pool state management information 61 is referred to as "corresponding pool 4" for convenience.

The pool state management information 61 includes, for example, the logical partition number for a logical partition belonging to the corresponding pool 4, a pool state indicating a state of the corresponding pool 4, such as "normal," "blocked," "invalid," or the like, and total pool capacity indicating a sum of the capacities of actual volumes allocated to the corresponding pool 4 (sometimes referred to as "Pool VOL" hereinafter). The pool state management information 61 further includes, for example, a storage capacity occupancy threshold (upper limit) indicating an upper limit of the proportion of pools in the storage capacities of the logical partitions of the corresponding pool 4, and a total pool capacity threshold (upper limit) which is an upper limit of the entire capacity ("pool capacity" hereinafter) of the corresponding pool 4. Further, the pool state management information 61 includes, for example, a pool usage rate threshold (upper limit) for judging an opportunity to add a new pool free region to the corresponding pool 4, and a pool usage rate threshold (lower limit) for judging an opportunity to delete a pool free region from the corresponding pool 4. The pool state management information 61 further includes, for example, a pool usage rate confirmation time which is a time when a pool usage rate is previously (or last, for example) confirmed, a pool usage rate confirmation hour threshold which is used for judging an opportunity to automatically delete pool capacity, a pool VOL addition mode for registering whether to add a new free region to a pool "automatically" or "manually," a free pool group management information for managing an unused pool group 40 in the corresponding group 4, and a pool VOL number list which is a list of the numbers of pool VOL configuring the corresponding pool 4.

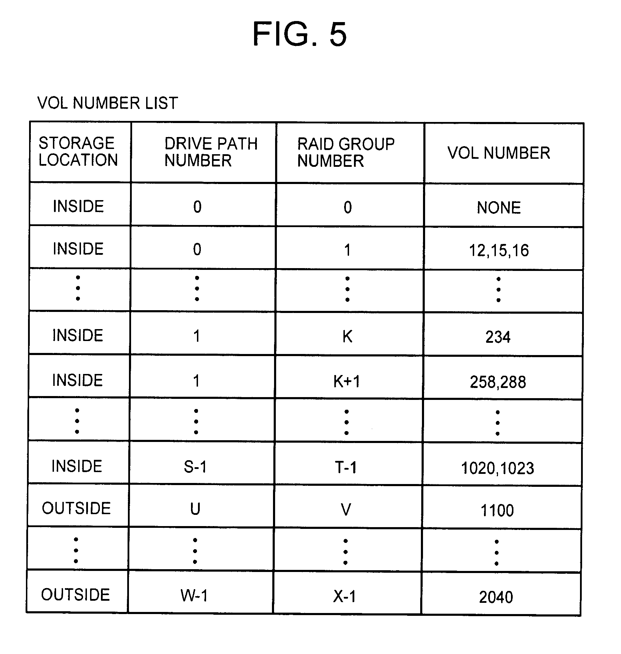

Fig. 5 shows an example of a format of a VOL number list.

In the VOL number list, for example, a storing location, drive path number, RAID group number, and VOL number are included.

The storing location indicates whether a storage region exists "inside" of the storage system 2 or in other storage system 2 ("outside").

The drive path number is a number for specifying a pair of two paths in the paths connected from a pair of drive interfaces 202 to the drive 210.

The RAID group number specifies a group of drives 210 in a range for dispersing and storing a group of data items to which a redundant code is applied, when storing the data with the redundant code applied, such as RAID (Redundant Array Of Independent Disks) 1, RAID 5, and the like, in the drive 210.

The VOL number is a number for uniquely specifying an actual volume. Various IDs may be used as the VOL number, instead of using numbers.

It should be noted that, regarding an item in which the storing location is defined as "outside," the highest priority path among a plurality of path information items 67 related to the external VOL information 66 can be specified. In this case, for the drive path number, a number for specifying a path of the channel interface 201 connected to the external storage system 2b may be set. Further, for the RAID group number, information for specifying an external volume (for example, target information and/or LUN (Logical Unit Number), etc.) may be set.

The pool VOL number list included in the pool state management information 61 and various VOL number lists described hereinafter (for example, pool group VOL number list or free pool VOL number list) can be configured in the format of the VOL number list illustrated in Fig. 5.

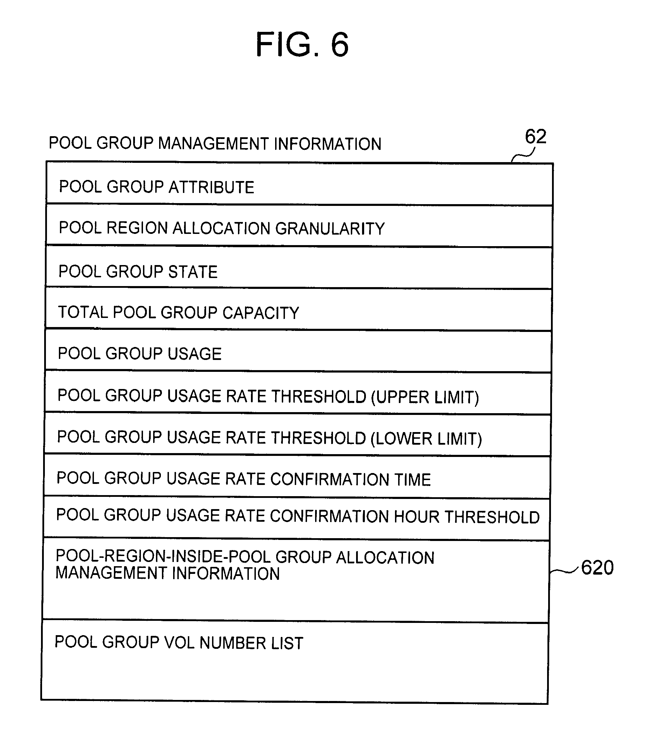

Fig. 6 shows an example of the pool group management information 62 which is a part of the pool management information 60. Hereinafter, a pool group 40 corresponding to the pool group management information 62 is referred to as "corresponding pool group 40" for convenience.

The pool group management information 62 includes, for example, a pool group attribute indicating a function using the corresponding pool group 40 (snapshot function, for example), and pool region allocation granularity which indicates unit capacity for allocating a pool region in the corresponding pool group 40. The pool group management information 62 further includes, for example, a pool group state indicating a state of the corresponding pool group 40, such as "normal, " "blocked, " "invalid, " or the like, and total pool group capacity indicating a sum of the capacities of pool VOLs allocated to the corresponding pool group 40. The pool group management information 62 further includes, for example, pool group usage, which, of the total pool group capacity, indicates capacity of a region which is actually allocated to and being used in a virtual volume, a pool group usage rate threshold (upper limit) for judging an opportunity to add a new pool free region to the corresponding pool group 40, and a pool group usage rate threshold (lower limit) for judging an opportunity to release a pool region from the corresponding pool group 40 to the pool free region group 41. The pool group management information 62 further includes, for example, a pool group usage rate confirmation time which indicates a time when a pool group usage rate is previously (or last, for example) confirmed, a pool group usage rate confirmation hour threshold which is used for judging an opportunity to automatically delete pool group capacity, pool-region-inside-pool group allocation management information 620 which is information for managing allocation of pool regions inside the corresponding pool group 40, and a pool group VOL number list in which the numbers of pool VOL configuring the corresponding pool group 40 are registered.

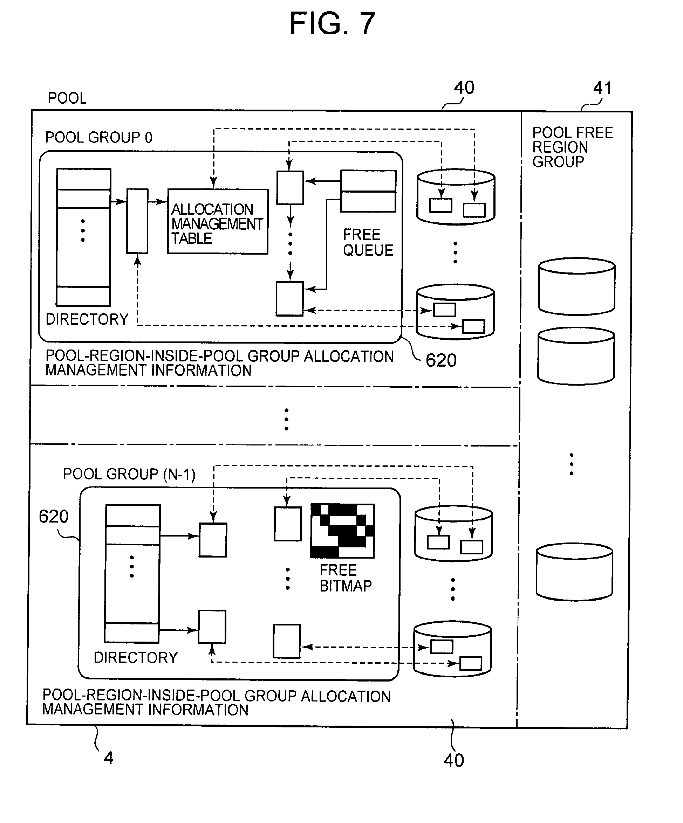

Fig. 7 shows an example of an outline of the pool-region-inside-pool group allocation management information 620.

Management patterns can be made different in accordance with the attributes of the pool groups. The management pattern shown in Fig. 7 is an example, thus the patterns are not limited to this example.

A region of a pool VOL which is allocated to the pool group 40 is split into pool region allocation granularity units, and an allocation management table is related to each of the split regions. In an unused state in which the table is not related to a region of the virtual volume 5 (for example, queue or bitmap), the allocation management table is managed by means of free management information, and, in a used state in which the table is related to the region of the virtual volume 5, connection is made to a search directory for specifying a pool VOL region from the region of the virtual volume 5.

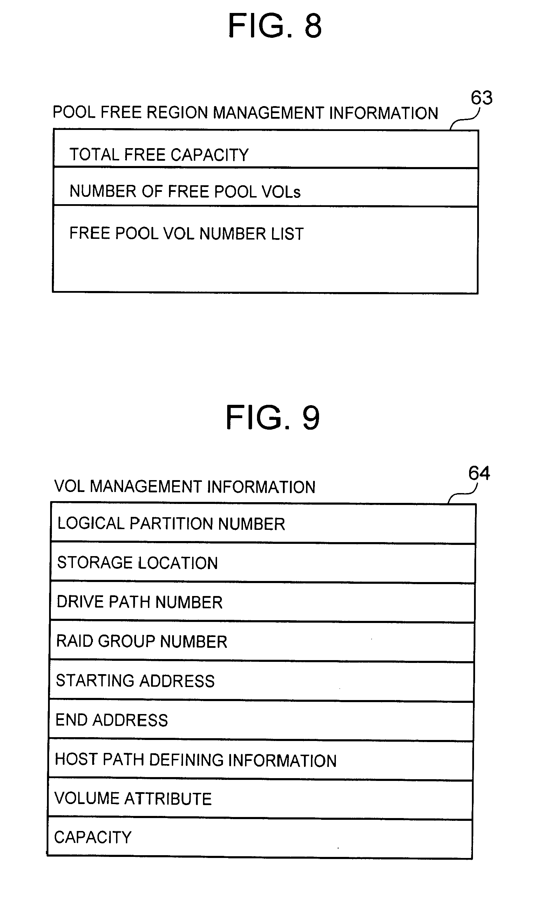

Fig. 8 shows an example of the pool free region management information 63 which is a part of the pool management information 60.

The pool free region management information 63 includes, for example, total free capacity indicating a sum of the capacities of pool VOLs of the pool free region group 41 (i.e. capacity of the pool free region group 41), the number of free pool VOLs indicating the total number of pool VOLs of the pool free region group 41, and a free pool VOL number list in which the number of each pool VOL of the pool free region group 41 is registered.

Fig. 9 shows an example of the VOL management information 64.

The VOL management information 64 is present in every logical volume (sometimes abbreviated as "VOL"), and stores information of each VOL. A VOL corresponding to the VOL management information 64 is referred to as "corresponding VOL" hereinafter for convenience. The corresponding VOL may be an actual volume or a virtual volume.

The VOL management information 64 includes, for example, a logical partition number of a logical partition to which the corresponding VOLbelongs, a storing location which indicates whether the corresponding VOL exists "inside" of the storage system 2 having the VOL management information 64 or in other storage system 2 ("outside"). The VOL management information 64 further includes, for example, a drive path number which is a number specifying a pair of two paths in paths connected from a pair of drive interfaces 202 to the drive 210, and the RAID group number which specifies a group of drives 210 in a range for dispersing and storing a group of data items to which a redundant code is applied, when storing the data with redundant code applied, such as RAID 1, RAID 5, and the like, in the drive 210. Moreover, the VOL management information 64 includes, for example, a starting address and an end address inside a RAID group, host path defining information indicating a path which enables access from the host computer 10 (for example, information having a port number of the channel interface 201 and LUN), a volume attribute indicating an attribute of the corresponding VOL (for example, pool VOL, virtual volume, and the like), and VOL capacity indicating capacity of the corresponding VOL.

It should be noted that, regarding an item in which the storing location is defined as "outside," the items of the drive path number and the RAID group number are made invalid, and instead, an ID for specifying a storing location for the external VOL information 66 in which the corresponding external VOL is registered may be set. Further, for the virtual volume, "virtual VOL" attribute may be set as a VOL attribute, and a pool group number may be set in the item of the drive path number.

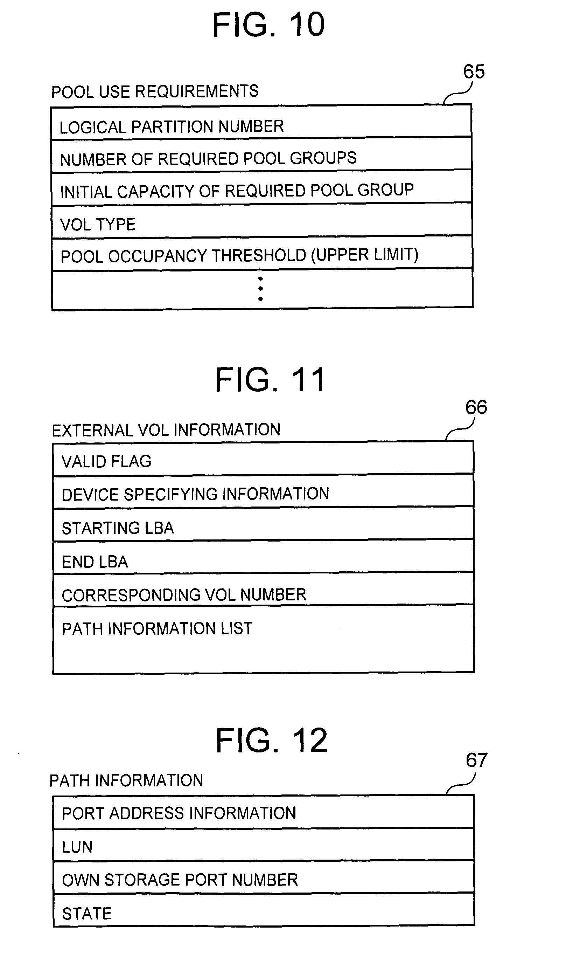

Fig. 10 shows an example of the pool use requirements 65.

The pool use requirement 65 is, for example, a type of table. The table may exist as many as the number of functions which can be installed in every logical partition and use pools. Although depending on the function, the pool use requirements 65 is configured with a logical partition number, the number of pool groups required at the time of installation, required initial pool group capacity, a VOL type indicating a required internal/external VOL type or RAID construction, a pool occupancy threshold (upper limit) indicating the proportion of pools that can be occupancy by the function.

Particularly, when using the volume copy function by a virtual volume in the storage system 2 (a volume copy function in which a primary virtual volume and secondary virtual volume do not share data), in order to avoid loss of the data which can be caused by failure in the pools, defining a plurality of pool groups is taken as a necessary condition so that the pool groups used by the primary virtual volume and second virtual volume can be divided. When actually using the copy function, for example, the primary virtual volume 5P and the secondary virtual volume 5S are prepared, the pool group 40A is related to the primary virtual volume 5P, and the pool group 40B is related to the secondary virtual volume 5S. A pair of the primary virtual volume 5P and second virtual volume 5S is created. When these volumes are a pair, data written in the primary virtual volume 5P is also written in the secondary virtual volume 5S. For this reason, when the pair is split, a group of data items at the time immediately before the splitting of the pair occurs and stored in the primary virtual volume 5P are all copied to the pool group 40B corresponding to the secondary virtual volume 5S. Therefore, even when failure occurs in the pool group 40A used by the primary virtual volume 5P, and thus the pool group 40A becomes unusable, the data of the secondary virtual volume 5S can be used.

Regarding a method of determining the pool occupancy threshold (upper limit), for example, for each function using an installable pool region (abovementioned various functions such as snapshot function), allocation in the pools (for example, supposed that the entire pool 4 is 100, IO processing function : 40, snapshot function : 30, journal copy function : 20, volume copy function : 5, free : 5, and the like) may be specified.

A system of managing volumes of the external storage system 2b in the storage system 2a is described next.

Fig. 11 shows an example of the external VOL information 66.

The external VOL information 66 is information for uniquely specifying an external VOL (VOL existing in the external storage system). Hereinafter, an external VOL corresponding to the external VOL information 66 is referred to as "corresponding external VOL." The external VOL information 66 includes, for example, a valid flag indicating that data stored in the corresponding external VOL is valid, and device-specifying information which stores information obtained using an INQUIRY command of SCSI or the like (Small Computer System Interface) for uniquely specifying the corresponding external VOL. Moreover, the external VOL information 66 further includes, for example, a starting LBA (Logical Block Address) and an end LBA of the corresponding external VOL, a corresponding VOL number for specifying a VOL inside the storage system 2a to which the corresponding external VOL corresponds, and a path information list for specifying an access path for accessing the corresponding external VOL.

Fig. 12 shows an example of the path information 67 configuring the path information list of the external VOL information 66.

The path information 67 is information for specifying a path for accessing the corresponding external VOL. The path information 67 includes, for example, port address information for specifying a port of the storage system 2b in which the corresponding external VOL exists, LUN to which the corresponding external VOL corresponds in the port of the storage system 2b in which the corresponding external VOL exists, a port number of the storage system 2a which is used to access the corresponding external VOL, and a state of the access path.

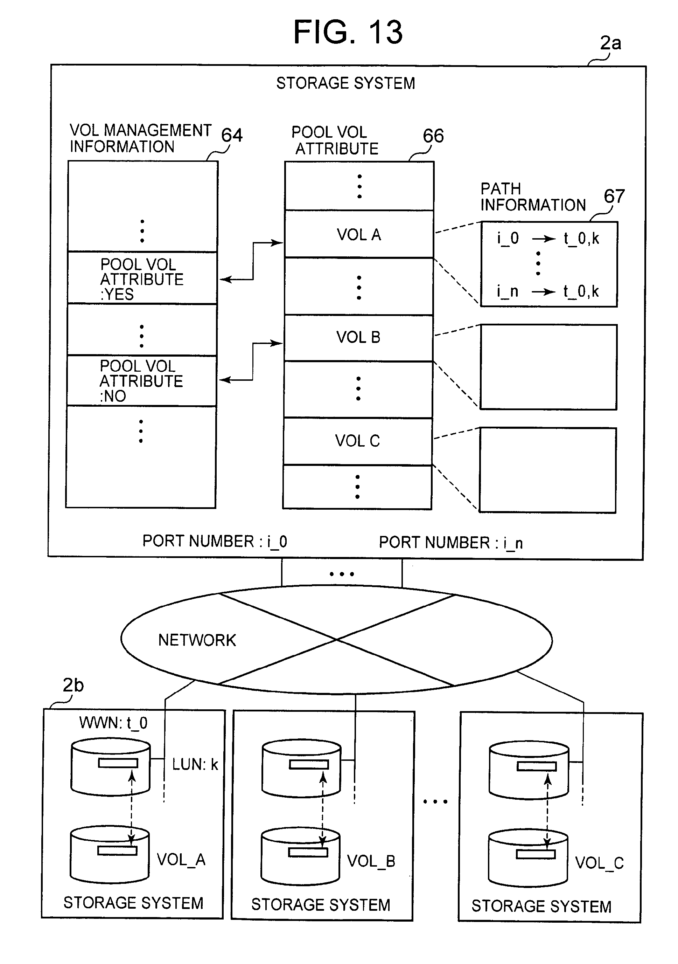

Fig. 13 shows an example of an outline of a management system of the external VOL.

The storage controller 20 of the storage system 2a can specify an external VOL of the external storage system 2b when the system 2a is started (or by means of an instruction fromoutside) (discovery) . For the specified external VOL, an access from other device (for example, other storage system 2) to the corresponding external VOL is limited, thus the storage controller 20, for example, attempts to set a PERSISTENT RESERVE attribute in the SCSI for the corresponding external VOL, and can register the external VOL information 66 and the path information 67 for the external VOL to which an access is limited for the other device. Furthermore, in order to use the specified external VOL as a VOL of the storage system 2a, the storage controller 20 can register information on the corresponding external VOL to the VOL management information 64. When the number of entries of the external VOL information 66 is higher than the number of entries of the VOL management information 64, there may exist an external VOL which is registered in the external VOL information 66 but not registered in the VOL management information 64.

When actually using the external VOL as a pool VOL, the volume attribute of the VOL management information 64 is modified to the pool VOL. Further, when actually using the external VOL as a VOL to which access is possible from the host computer 10, the host path defining information is set. In Fig. 13, VOL_A, VOL_B, VOL_C are registered to the storage system 2a, and two paths are registered in the VOL_A. Although VOL_A, VOL_B, and VOL_C are registered in the VOL management information 64, only VOL_A is used as a pool VOL. For this reason, the ID of VOL_A in the external VOL information 66 is registered in the VOL management information 64, and the volume attribute of VOL_A is taken as the pool VOL in the VOL management information 64. Moreover, the two paths are registered in VOL_A, and, according to one of the paths "i_0 → t_0, k," the pool region of the VOL_A is allocated by causing it to pass through from a port in which the port number of the storage system 2a is "i_0" to a port in which WWN (World Wide Name) in the external storage system 2b is "t_0," and to access the virtual volume in which the LUN is "k".

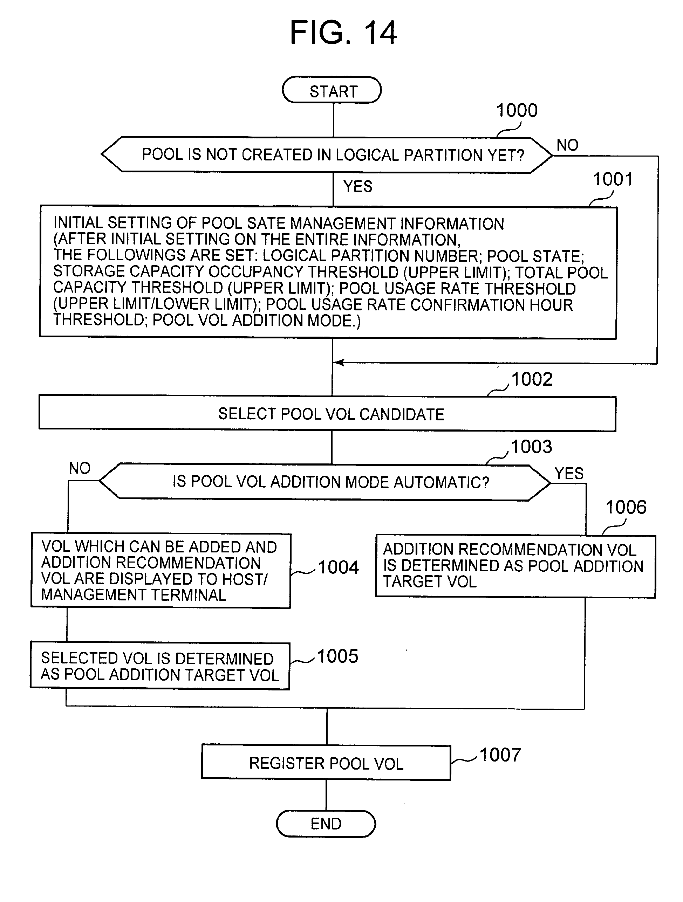

Fig. 14 shows an example of a flow of processing performed by the pool creation/VOL registration program 50.

The pool creation/VOL registration program 50 is activated by, for example, an instruction sent from the host computer 10 and/or management terminal 11. Parameters at the time of activation, which are specified by the host computer 10 and/or management terminal 11, are the logical partition number of the storage system 2, the total pool capacity, storage capacity occupancy threshold (upper limit), the total pool capacity threshold (upper limit), the pool usage rate threshold (upper limit), the pool usage rate threshold (lower limit), the pool usage rate confirmation hour threshold, the pool VOL addition mode, and an addition recommendation VOL policy (see Fig. 4). Regarding the total pool capacity threshold (upper limit), when an upper limit is not set as the total pool capacity, a sufficiently large value which exceeds the storage capacity of the logical partition may be set.

First of all, the pool creation/VOL registration program 50 judges whether or not a pool has been created in a specified logical partition (Step 1000). This step can be performed by referring to a pool state of the pool state management information 61. If a pool has been created (N in Step 1000), Step 1002 is carried out.

When a pool is uncreated (Y in Step 1000), the pool creation/VOL registration program 50 performs initial setting of the pool state management information 61 (Step 1001) . Specifically, for example, the pool creation/VOL registration program 50 sets initial values (for example, 0) in the entire table which is the information 61, thereafter sets the logical partition number, total pool capacity, pool usage rate threshold (upper limit/lower limit), pool usage rate confirmation hour threshold, pool VOL addition mode, storage capacity occupancy threshold (upper limit), and total pool capacity threshold (upper limit), which are the specified activation parameters, and sets the pool state to "blocked." Setting the pool state to "blocked" is because a pool VOL is not yet allocated to the pool.

Next, the pool creation/VOL registration program 50 executes pool VOL candidate selection for specifying a VOL candidate to be added to the pool (Step 1002).

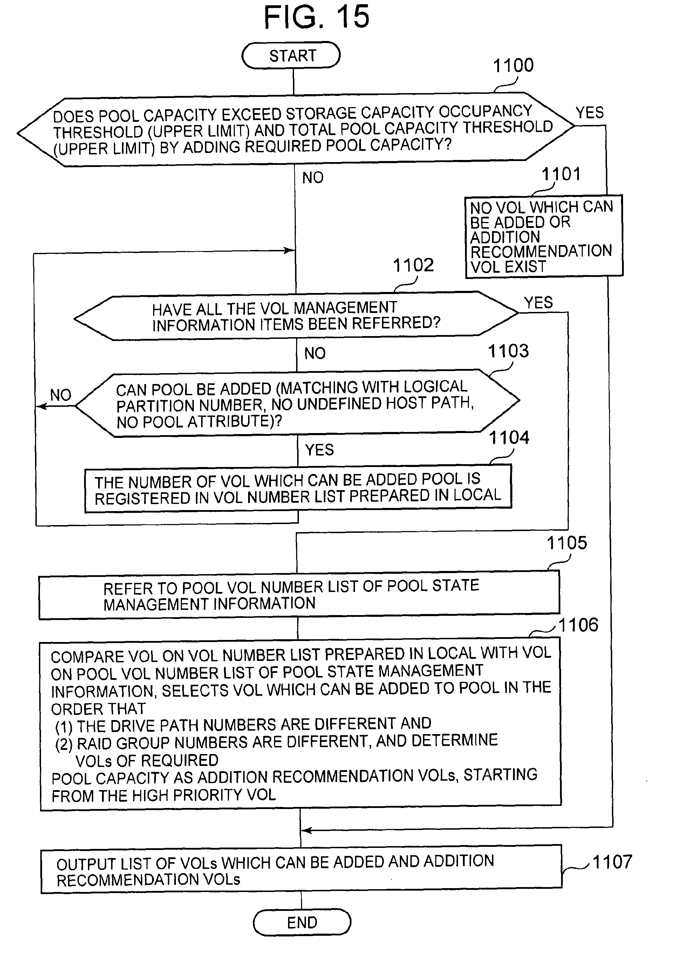

Here, Fig. 15 is used to explain an example of a flow of selecting a pool VOL candidate. It should be noted that when a VOL that can be registered to the pool is not yet defined, an operator (user) of the host computer 10 or an operator (maintenance personnel) of the management terminal 11 may define the VOL. Furthermore, in the storage regions managed by the storage systems 2, the VOL definition may be carried out automatically in the order specified in advance.

First, the pool creation/VOL registration program 50 judges whether the total pool capacity exceeds the storage capacity occupancy threshold (upper limit) and total pool capacity threshold (upper limit) through the addition of necessary pool capacity which is specified automatically or manually (Step 1100) . This judgment is carried out mainly at the time of automatic pool capacity expansion. Specifically, for example, it is judged whether (total pool capacity + required pool capacity) >= (≥) (total capacity of the logical partition x storage capacity occupancy threshold (upper limit)) and (total pool capacity + required pool capacity) >= (≥) total pool capacity threshold (upper limit) are established.

When the above conditions are established (Y in Step 1100), it is judged that a VOL cannot be added to the pool, a VOL which can be added and addition recommendation VOL are set as invalid (Step 1101), and Step 1107 is performed. The setting may be performed for the pool state management information 61, or may be performed in a work region on the memory until the processing shown in Fig. 14 ends, and deleted when the processing of Fig. 14 ends.

When the above conditions are not established (N in Step 1100), the pool creation/VOL registration program 50 judges whether all of the VOL management information items 64 have already been referred (Step 1102) . When the information items have already been referred (Y in Step 1102), Step 1105 is performed.

When the information items have not been referred (N in Step 1102), the pool creation/VOL registration program 50 judges whether a VOL being referred to can be added to the pool (Step 1103) . Specifically, for example, the pool creation/VOL registration program 50 judges whether the logical partition number of the VOL being referred to matches the pool which is the destination for adding the VOL, whether a host path of the VOL being referred to has not yet been defined, and whether the volume attribute of the VOL referred to is not the pool VOL (VOL which has not yet been registered in the pool). When results of these judgments are affirmative, it can be judged that the VOL can be added to the pool. When it cannot be added to the pool (N in Step 1103), Step 1102 is performed.

When the VOL can be added to the pool (Y in Step 1103), the pool creation/VOL registration program 50 registers the VOL being referred to in the VOL number list prepared in the local memory 57 (Step 1104) . The VOL number list shows the number of VOL which can be added to the pool. Thereafter, Step 1102 is performed.

Next, the pool creation/VOL registration program 50 refers to the pool number list of the pool state management information 61 (Step 1105).

Next, the pool creation/VOL registration program 50 determines an addition recommendation VOL (Step 1106). The addition recommendation VOL policy is to select an addition recommendation VOL on the basis of priorities of VOLs that can be added to the pool, in consideration of the status of the pool which is a destination for adding the VOLs. The addition recommendation VOL policy may be received using the parameters for activation, as described above. Various conditions can be considered as a policy to determine the priorities. However, when the independence of performance in the pool VOL is taken in to consideration, for example, it can be considered that the VOLs which can be added to the pool are selected in the order that (1) the drive path numbers are different and (2) RAID group numbers are different, and that the required pool capacity is taken as the addition recommendation VOLs, starting from the high priority VOL. In another method, when wishing to confine the drive paths and/or RAID groups used by the pool to a specified range as much as possible, at least one of the following conditions: (1) RAID group number matches; and (2) drive path number matches, is taken into consideration to determine the addition recommendation VOLs . In yet another method, the addition recommendation VOLs may be determined by, particularly, increasing and/or reducing the priorities of the storage regions of the external storage system 2b. In yet another method, the addition recommendation VOLs may be determined by means of at least one of RAID configuration information items such as of physical performance of the drive, RAID level (for example, RAID 1 or RAID 5), the stripe size for dispersing the data among the drive in the RAID, and the number of data blocks to which parities in RAID 5 are added (for example, when configuring RAID 5 with four drives, 3D + 1P is established, where the number of data blocks is 3). Finally, the pool creation/VOL registration program 50 outputs a list of the VOLs that can be added to the pool and the addition recommendation VOLs (Step 1107), and ends the processing.

Returning to Fig. 14, after the pool VOL candidate selection is performed the pool creation/VOL registration program 50 judges whether the pool VOL addition mode is "automatic" or not (Step 1003) .

When it is not "automatic" but "manual," (N in Step 1003), the pool creation/VOL registration program 50 displays the VOLs that can be added to the pool and the addition recommendation VOLs to the host computer 10 and/or management terminal 11 (Step 1004). Accordingly, the user or maintenance personnel is allowed to select a pool addition target VOL. Thereafter, a result of selection is received, and the pool creation/VOL registration program 50 determines a selected VOL as the pool addition target VOL (Step 1005) .

If the pool VOL addition mode is "automatic" (Y in Step 1003), the pool creation/VOL registration program 50 determines the addition recommendation VOL as the pool addition target VOL (Step 1006).

Finally, the pool creation/VOL registration program 50 executes pool VOL registration (Step 1007).

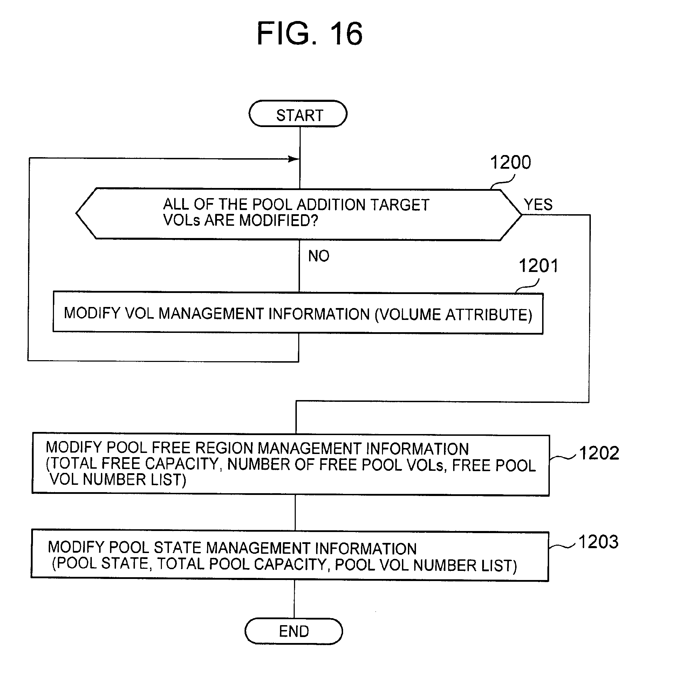

Fig. 16 is used to explain an example of a flow of registering a pool VOL.

First of all, the pool creation/VOL registration program 50 judges whether the VOL management information 64 is modified for all of the pool addition target VOLs (Step 1200). If modified (Y in Step 1200), Step 1202 is performed.

If unmodified (N in Step 1200), the pool creation/VOL registration program 50 modifies the VOL management information 64. Specifically, for example, the pool creation/VOL registration program 50 sets a pool VOL as the volume attribute. Thereafter, Step 1200 is performed.

Next, the pool creation/VOL registration program 50 modifies the pool free region management information 63 (Step 1202). Specifically, for example, the total capacity of the pool addition target VOLs are added to the total free capacity, the number of pool addition target VOLs is added to the number of free pool VOLs, and the pool addition target VOLs are registered in the free pool VOL number list.

Finally, the pool creation/VOL registration program 50 modifies the pool state management information 61 (Step 1203). Specifically, for example, the total capacity of the pool addition target VOLs are added to the total pool capacity, the pool addition target VOLs are registered in the pool VOL number list, and the pool state is set to "normal."

The above is the explanation of the pool creation/VOL registration program 50.

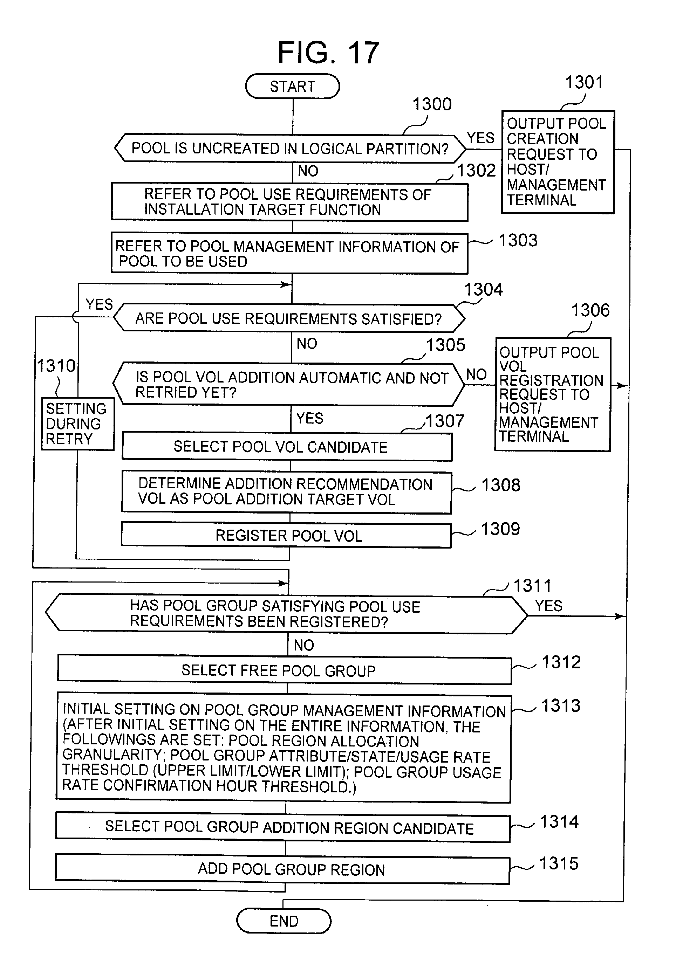

Fig. 17 shows an example of a flow of processing performed by the pool group creation program 51.

The pool group creation program 51 is executed when a new function using a pool is installed in the logical partitions of the storage systems 2.

First, the pool group creation program 51 judges whether a pool is uncreated in the logical partition (Step 1300). If a pool is uncreated (Y in Step 1300), the pool group creation program 51 requests the host computer 10 and/or management terminal 11 to create a pool (Step 1301), and ends the processing. When a pool has already been created (N in Step 1300), the pool group creation program 51 refers to the pool use requirements 65 for an installation target function (Step 1302).

Next, the pool group creation program 51 refers to the pool management information 60 of a pool to be used (Step 1303).

Next, the pool group creation program 51 judges whether the state of the pool satisfies the pool use requirement 65 (Step 1304) . According to the pool use requirements 65, it is confirmed whether the required number of pool groups can be created, and whether there are enough pool free regions to be allocated to the pool groups respectively. If the pool use requirements 65 are satisfied (Y in Step 1304), Step 1311 is performed.

When the pool use requirements 65 are not satisfied (N in Step 1304), the pool group creation program 51 judges whether the pool VOL addition mode is "automatic" and has not yet been retired (Step 1305).

If the above conditions are not established (N in Step 1305), the pool group creation program 51 outputs a pool VOL registration request to the host computer 10 and/or management terminal 11 (Step 1306) . It should be noted that if the pool capacity cannot be expanded due to the limitations in the storage capacity occupancy threshold (upper limit) and the total pool capacity threshold (upper limit), the pool group creation program 51 displays the fact that the pool capacity cannot be expanded.

If the above conditions are established (Y in Step 1305), the pool group creation program 51 executes the pool VOL candidate selection (Step 1307) . The flow of the pool VOL candidate selection is as described above with reference to Fig. 15.

Next, the pool group creation program 51 determines an addition recommendation VOL as a pool addition target VOL (Step 1308), and executes the pool VOL registration (Step 1309). The flow of the pool VOL registration is as described above with reference to Fig. 16.

Next, the pool group creation program 51 sets a flag during the retry, which indicates that the retry processing is being performed (Step 1310), and returns to Step 1304.

Next, the pool group creation program 51 judges whether a pool group, which can satisfy the pool use requirements 65, has been registered (Step 1311). If registered (Y in Step 1311), the processing is ended.

If unregistered (N in Step 1311), the pool group creation program 51 refers to the pool group free management information of the pool state management information 61, and selects a free pool group (Step 1312).

Next, the pool group creation program 51 performs initial setting on the pool group management information 62 (Step 1313). Specifically, for example, the pool group creation program 51 sets initial values (for example, 0) in the entire table which is the information 62, thereafter sets information, which indicates a function which uses the pool group, as the pool group attribute, sets the pool group region allocation granularity, pool group usage rate threshold (upper limit), pool group usage rate threshold (lower limit), and pool group usage rate confirmation hour threshold in accordance with the function, and sets the pool group state to "blocked." Setting the pool group state to "blocked" is because a pool VOL is not yet allocated to the pool group.

Next, pool group addition region candidate selection is performed (Step 1314).

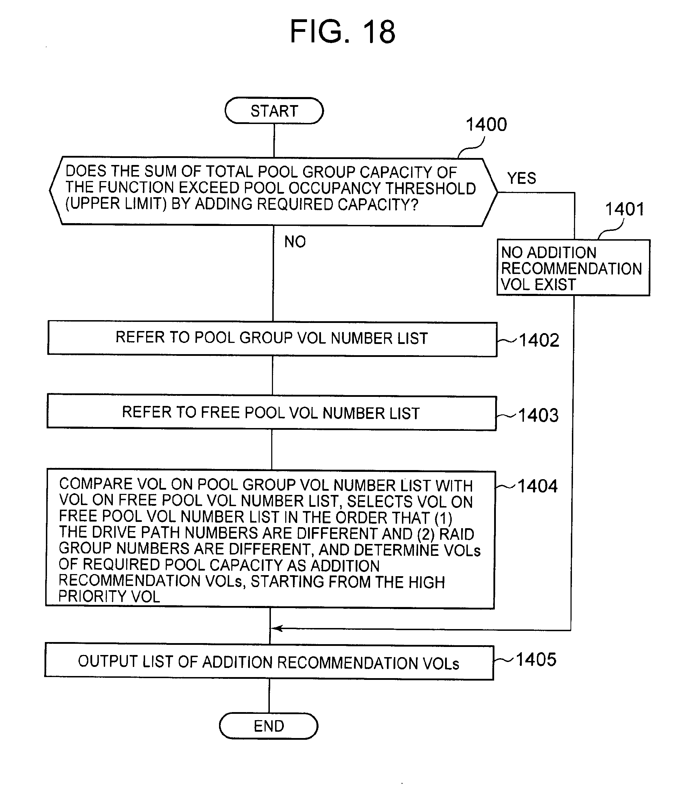

Fig. 18 explains an example of a flow of selecting a pool group addition region candidate.

First of all, the pool group creation program 51 judges whether the sum of total pool group capacity of the function exceeds a pool occupancy threshold (upper limit) by adding required capacity (Step 1400). This judgment is carried out mainly at the time of automatic expansion of the pool capacity. Specifically, for example, in the pool, a sum of the total pool group capacity (A) is obtained for a pool group which has the same pool group attribute as a target pool group, and it is judged, for example, whether {((A) + (B)) / total pool capacity} x 100 >= (≥) (C) is established for required capacity (B) and the pool occupancy threshold (upper limit) of the function in the pool use requirements 65 (C).

When the above condition is established (Y in Step 1400), the pool group creation program 51 judges that a pool VOL can be added to the pool group, sets the addition recommendation VOL as invalid (Step 1401), and executes Step 1405.

When the above condition is not established (N in Step 1400), the pool group creation program 51 refers to the pool group VOL number list (Step 1402) .

Next, the pool group creation program 51 refers to the free pool VOL number list (Step 1403).

Next, the pool group creation program 51 determines the addition recommendation VOL from the free pool VOL number list (Step 1404) . Although the addition recommendation VOL can be determined on the basis of the above-described various priorities, the priorities may be changed by an allocated function. For example, the actual volume 42 inside the storage system 2a comprising reliability and performance may be preferentially allocated to the IO processing function. On the other hand, the actual volume 42 of the external storage system 2b in which capacity can be secured relatively easily may be preferentially allocated to the snapshot function, journal copy function, and the like. This processing can be the same in the processing shown in Fig. 15.

Finally, the pool group creation program 51 outputs a list of addition recommendation VOLs (Step 1405).

Returning to Fig. 17, the pool group creation program 51 adds a pool group region after selecting a pool group addition region candidate (Step 1315).

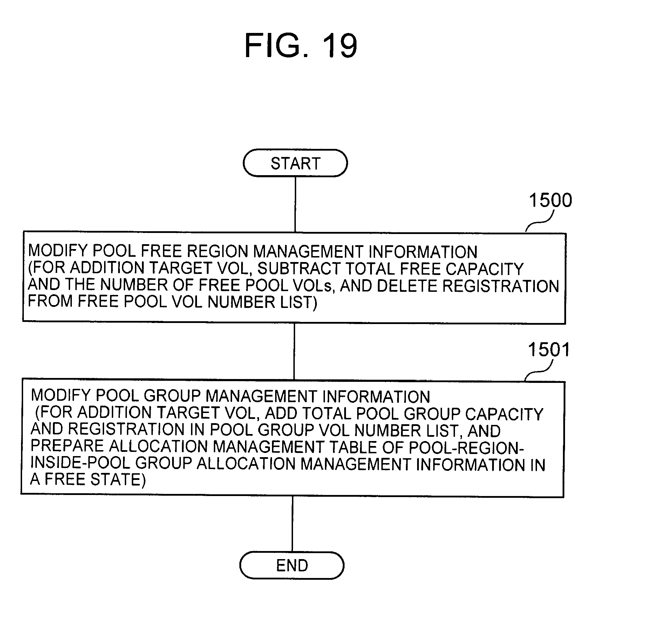

Fig. 19 is used to explain an example of a flow of adding a pool group region.

First of all, the pool group creation program 51 modifies the pool free region management information 63 (Step 1500). Specifically, for example, the pool group creation program 51 subtracts the capacities of the entire pool addition target VOLs from the total free capacity, subtracts the number of pool addition target VOLs from the number of free region pool VOLs, and deletes registration of the pool addition target VOL from the free pool VOL number list.

Next, the pool group creation program 51 modifies the pool group management information 62 (Step 1501). Specifically, for example, the pool group creation program 51 adds the capacities of the entire addition target VOLs to the total pool group capacity, and registers the addition target VOLs to the pool group VOL number list. Further, for example, the pool group creation program 51 prepares the allocation management table of the pool-region-inside-pool group allocation management information 620 for every region in which the addition target VOL capacities are split in accordance with the pool region allocation granularity, and registers the allocation management table as a free state ((for example, in queue or bitmap).

Returning to Fig. 17, after the pool group region is added, Step 1311 is performed.

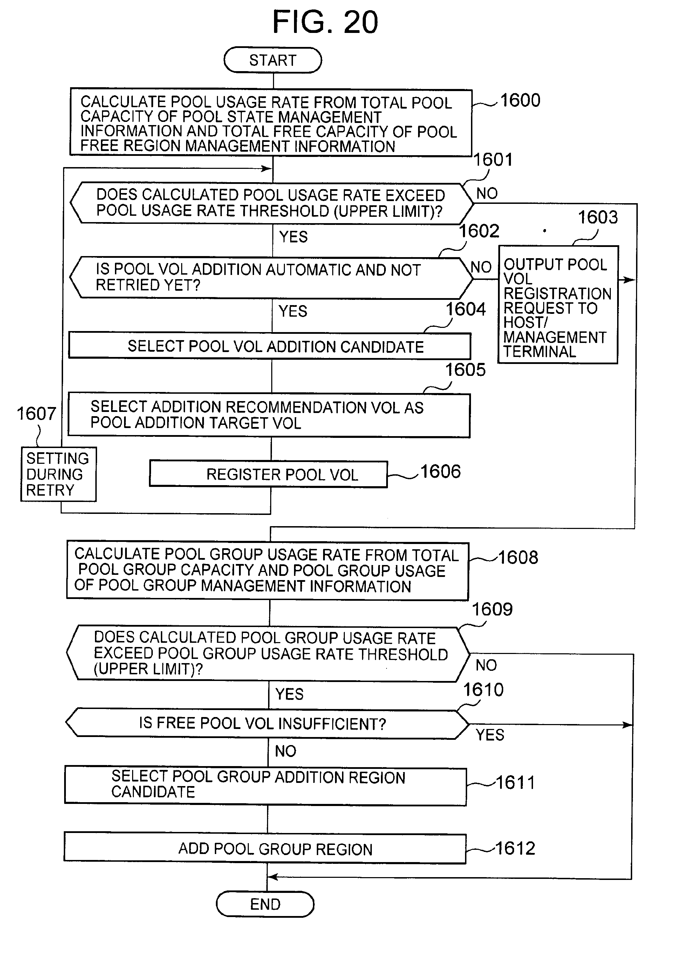

Fig. 20 shows an example of a flow of processing performed by the automatic capacity expansion program 52.

For example, in the case of securing a free region in a pool group, the automatic capacity expansion program 52 is activated when the usage rate of the pool group exceeds the pool group usage rate threshold (upper limit), or at the time of the pool group usage rate confirmation which is performed every time when certain time elapses.

First of all, the automatic capacity expansion program 52 calculates a pool usage rate from the total pool capacity of the pool state management information 61 and the total free capacity of the pool free region management information 63 (Step 1600).

Next, the automatic capacity expansion program 52 judges whether the calculated pool usage rate exceeds the pool usage rate threshold (Step 1601). If it does not exceed (N in Step 1601), Step 1608 is performed.

When it exceeds (Y in Step 1601), the automatic capacity expansion program 52 judges whether the pool VOL addition mode is automatic and has not yet been retried (Step 1602).

If the above condition is not established (N in Step 1602), the automatic capacity expansion program 52 outputs a VOL registration request to the host computer 10 and/or management terminal 11 (Step 1603). It should be noted that if the pool capacity cannot be expanded due to the limitations in the total pool capacity threshold (upper limit), the automatic capacity expansion program 52 displays the fact that the pool capacity cannot be expanded.

If the above conditions are established (Y in 1602), the automatic capacity expansion program 52 executes the pool VOL candidate selection (Step 1604). The flow of the pool VOL candidate selection is as described above with reference to Fig. 15.

Next, the automatic capacity expansion program 52 determines an addition recommendation VOL as a pool addition target VOL (Step 1605), and executes the pool VOL registration (Step 1606) . The flow of the pool VOL registration is as described above with reference to Fig. 16.

Next, the automatic capacity expansion program 52 sets a flag during the retry, which indicates that the retry processing is being performed (Step 1607), and returns to Step 1601.

Next, the automatic capacity expansion program 52 calculates pool group usage rate from the total pool group capacity and pool group usage of the pool group management information 62 (Step 1608) .

Next, the automatic capacity expansion program 52 judges whether the calculated pool group usage rate exceeds the pool group usage rate threshold (upper limit) (Step 1609) . If the calculated pool group usage rate does not exceed the pool group usage rate threshold (N in Step 1609), the processing is ended.

If the calculated pool group usage rate exceeds the pool group usage rate threshold (Y in Step 1609), the automatic capacity expansion program 52 judges whether there exist insufficient free pool VOLs (Step 1610). If there exist insufficient free pool VOLs (Y in Step 1610), the processing is ended.

If there exist sufficient free pool VOLs (N in Step 1610), the automatic capacity expansion program 52 selects the pool group addition region candidate (Step 1611) . The flow of the pool group addition region candidate selection is as described above with reference to Fig. 18.

Next, the automatic capacity expansion program 52 executes the processing of pool group region addition (Step 1612). The flow of the pool group region addition is as described above with reference to Fig. 19. Thereafter, the processing is ended.

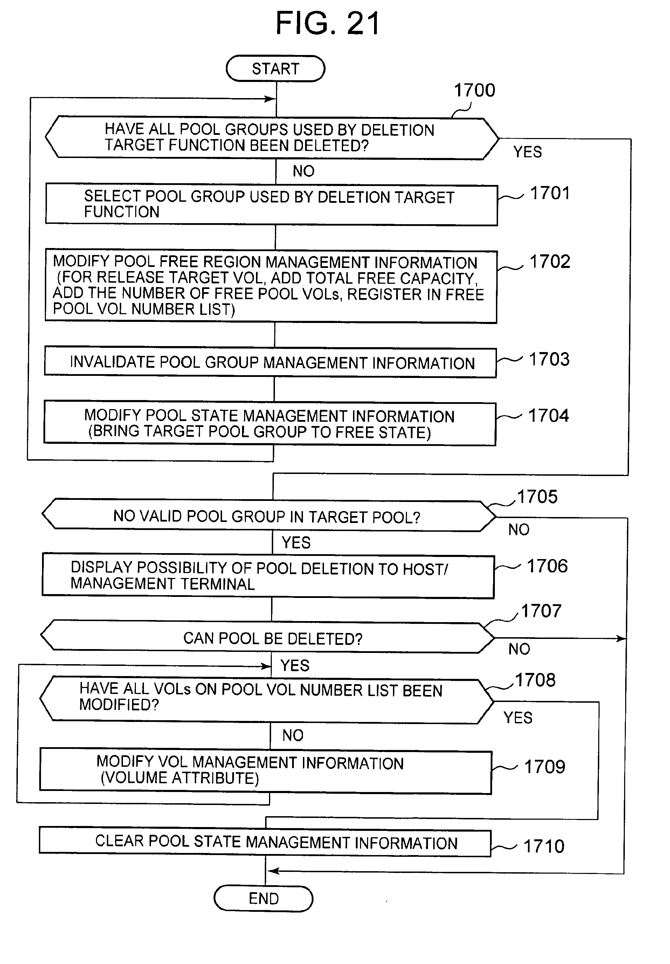

Fig. 21 shows an example of a flow of processing performed by the pool group deletion program 53.

The pool group deletion program 53 is executed when, for example, deleting a function, which uses pools, from the logical partitions of the storage systems 2.

First of all, the pool group deletion program 53 judges whether all of the pool groups used by a deletion target function have been already deleted (Step 1700). If all of the pool groups have been already deleted (Y in Step 1700), Step 1705 is performed.

If all of the pool groups have not yet been deleted (N in Step 1700), the pool group deletion program 53 selects a pool group to be used by the deletion target function (Step 1701), and modifies the pool free region management information 63 (Step 1702). Specifically, for example, the pool group deletion program 53 takes all VOLs on the pool group VOL number list for a target pool group as release target VOLs, adds the total capacity of the release target VOLs to the total free capacity, adds the number of release target VOLs to the number of free pool VOLs, and registers the release target pool VOLs in the free pool VOL number list.

Next, the pool group deletion program 53 invalidates the pool group management information 62 about the target pool group (Step 1703). Specifically, the state of the pool group is set to "invalid."

Next, the pool group deletion program 53 modifies the pool state management information 61 (Step 1704). Specifically, for example, the pool group deletion program 53 registers the state of the target pool group as a free sate in the pool group free management information.

Next, the pool group deletion program 53 judges whether there is no longer a valid pool group in the pool in which the pool group has been deleted (Step 1705). If a valid pool group still exists (N in Step 1705), the processing is ended.

If no valid pool group exists (Y in Step 1705), the pool group deletion program 53 displays a possibility of pool deletion to the host computer 10 and/or management terminal 11 (Step 1706). Accordingly, the user, maintenance personnel or the like is allowed to make a selection on the possibility of pool deletion. Although the user or maintenance personnel normally selects that the pool deletion is possible, when wishing to save the current pool configuration purposefully, the user or maintenance personnel may select that pool deletion is impossible. Thereafter, the pool group deletion program 53 receives a result of selection and judges the possibility of pool deletion (Step 1707).

If the pool deletion is impossible (N in Step 1707), the processing is ended.

If the pool deletion is possible (Y in Step 1707), the pool group deletion program 53 judges whether the volume attributes of all of the VOLs on the pool VOL number list have been already modified (Step 1708).

If the volume attributes of all of the VOLs have been already modified (Y in Step 1708), Step 1709 is performed.

If the volume attributes of all of the VOLs have not yet been modified (N in Step 1708), the pool group deletion program 53 deletes the pool VOL attributes from the volume attributes of the VOLs listed on the pool VOL number list, the volume attributes being listed on the VOL management information 64 (Step 1709). Thereafter, Step 1708 is performed.

Finally, the pool group deletion program 53 invalidates the pool state management information 61 (Step 1710). Specifically, the pool state is set to "invalid."

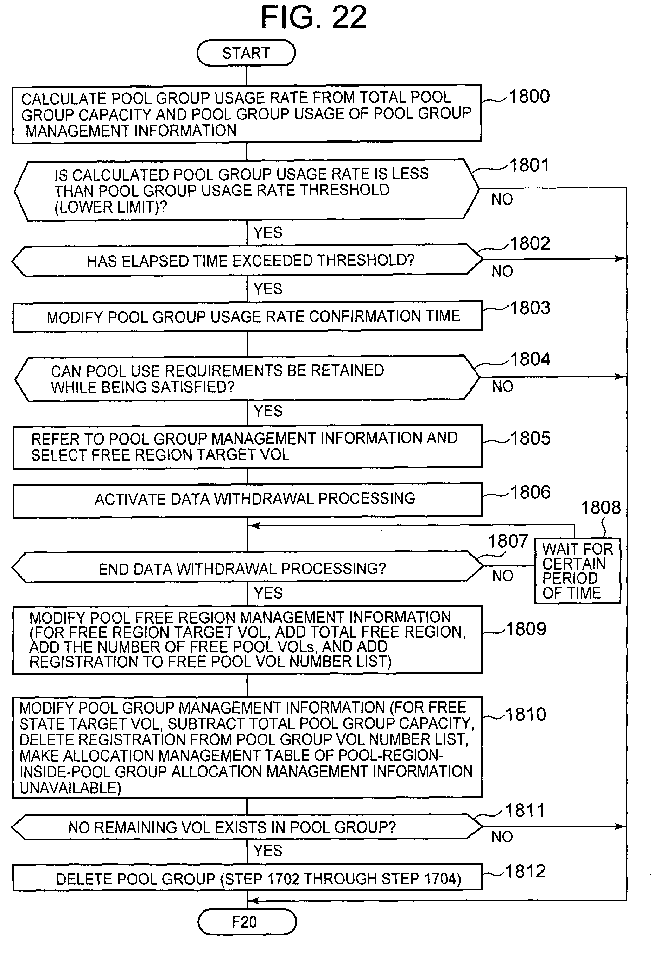

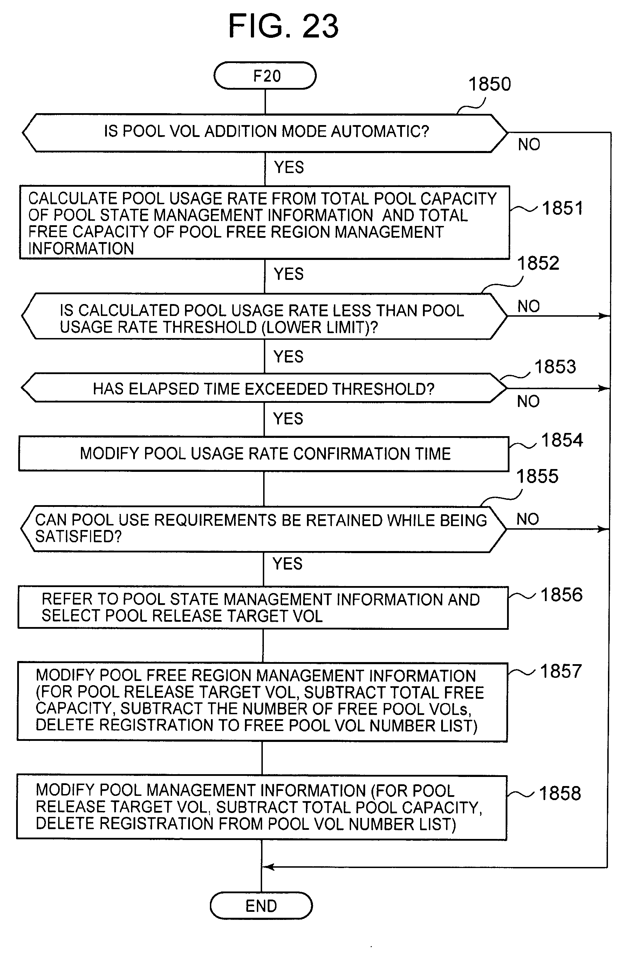

Fig. 22 and Fig. 23 show an example of a flow of processing performed by the automatic capacity deletion program 54. Specifically, the combination of Fig. 22 and Fig. 23 shows an example of a flow of processing performed by the automatic capacity deletion program 54.

The automatic capacity deletion program 54 can execute processing such as releasing pool VOLs, which are allocated to a pool group, as free pool VOLs when a state in which the pool group usage rate is below the threshold lasts, or, releasing pool VOLs, which are allocated to a pool, from the pool when a state in which the pool usage rate is below the threshold lasts. The automatic capacity deletion program 54 is activated, for example, at the time of the pool group usage rate confirmation which is performed every time when certain time elapses.

First of all, the automatic capacity deletion program 54 calculates a pool group usage rate from the total pool group capacity and the pool group usage of the pool group management information 62 (Step 1800).

Next, the automatic capacity deletion program 54 judges whether the calculated pool group usage rate is less than the pool group usage rate threshold (lower limit) (Step 1801). If this condition is not established (N in Step 1801), Step 1850 in Fig. 23 is performed.

If this condition is established (Y in Step 1801), the automatic capacity deletion program 54 confirms current time, refers to the pool group usage rate confirmation time and the pool group usage rate confirmation hour threshold of the pool group management information 62 (Step 1802). If the threshold is not exceeded (N in Step 1802), Step 1850 in Fig. 23 is performed.

If the threshold is exceeded (Y in Step 1802), the automatic capacity deletion program 54 sets the current time as the pool group usage rate confirmation time (Step 1803).

Next, the automatic capacity deletion program 54 judges whether or not the pool use requirements 65 can be retained while being satisfied after deletion of the capacity of the pool group (Step 1804).

If the pool use requirements cannot be retained (N in Step 1804), Step 1850 in Fig. 23 is performed. Such case may include, for example, a situation in which the minimum capacity of the pool group and requirements regarding the number of pool groups are set, but the capacities of the pool groups are too low, or a situation in which, since there is one VOL remaining in a pool group, the pool group is deleted by deleting the pool group capacity.

If the pool use requirements can be retained (Y in Step 1804), the automatic capacity deletion program 54 refers to the pool group management information 62 to select a VOL state which is in a free state (Step 1805). Requirements of the VOL which is a target of deletion, are such that, for example, it may be a VOL in which the pool group usage rate exceeds the pool group usage rate threshold (lower limit) by deleting this VOL, and in which the drive path number or RAID group number overlaps with another VOL inside of the pool group. Moreover, in order to reduce load of data withdrawal, the automatic capacity deletion program 54 may select a VOL of the lowest usage rate from the pool-region-inside-pool group allocation management information 620. The automatic capacity deletion program 54 may further select a plurality of free state target VOLs.

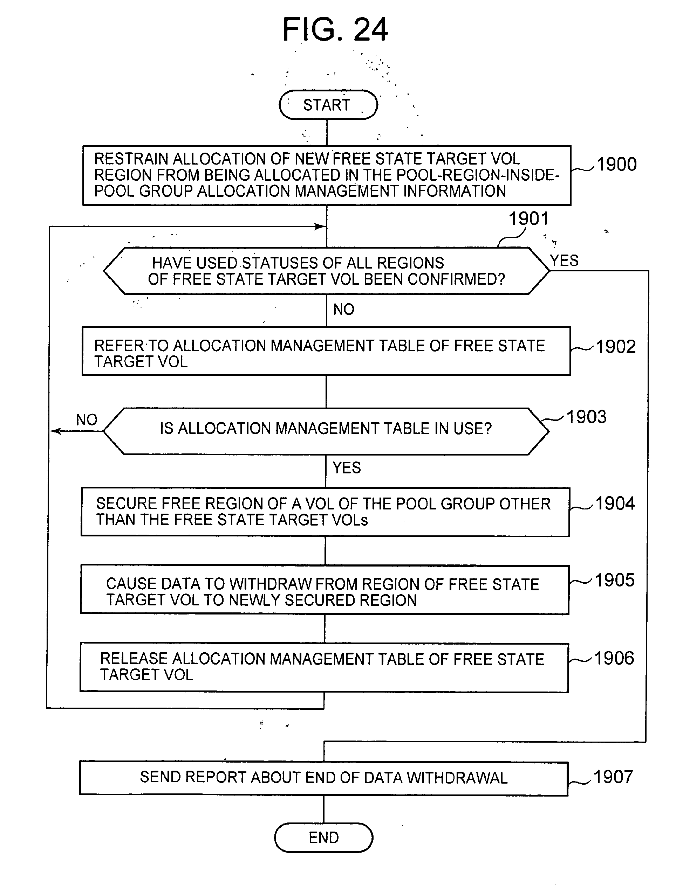

Next, the automatic capacity deletion program 54 activates the data withdrawal program 55 (Step 1806) . The processing performed by the data withdrawal program 55 is described with reference to Fig. 24.

Next, the automatic capacity deletion program 54 judges whether the data withdrawal program 55 has ended (Step 1807). If there is no report on the end of the data withdrawal program (N in Step 1807), the automatic capacity deletion program 54 executes Step 1807 again after waiting for a certain period of time.

Next, the automatic capacity deletion program 54 modifies the pool free region management information 63 (Step 1809). Specifically, for example, the automatic capacity deletion program 54 adds the capacities of the free state target VOLs to the total free capacity, adds the number of free state target VOLs to the number of free pool VOLs, and registers the free state target VOL in the free pool VOL number list.

Next, the automatic capacity deletion program 54 modifies the pool group management information 62 (Step 1810). Specifically, for example, the automatic capacity deletion program 54 subtracts the total capacity of the free state target VOLs from the total pool group capacity, and deletes registration of the free state target VOLs from the pool group VOL number list. Further, the automatic capacity deletion program 54, for example, changes the allocation management table, which is related to the free state target VOLs of the pool-region-inside-pool group allocation management information 620, from a free state to an unusable state (for example, deletes from a queue, or changes to a state in which bitmap is unusable).

Next, the automatic capacity deletion program 54 judges whether there still exists a remaining VOL in the pool group after the state of the free sate VOLs is changed to a free state (Step 1811). If there is a remaining VOL (N in Step 1811), Step 1850 in Fig. 23 is performed.

If there is no remaining VOL (Y in Step 1811), the automatic capacity deletion program 54 executes Steps 1702 through 1704, and deletes the pool group (Step 1812).

Next, the automatic capacity deletion program 54 judges whether the pool VOL addition mode is "automatic" (Step 1850) . If the pool VOL addition mode is not "automatic" (N in Step 1850), the automatic capacity deletion program 54 judges that the pool is not a target of automatic capacity deletion, and ends the processing.

If the pool VOL addition mode is "automatic" (Y in Step 1850), the automatic capacity deletion program 54 calculates pool usage rate from the total pool capacity of the pool state management information 61 and the total free capacity of the pool free region management information 63 (Step 1851).

Next, the automatic capacity deletion program 54 judges whether the calculated pool usage rate is less than the pool usage rate threshold (lower limit) (Step 1852). If this condition is not established (N in Step 1852), the processing is ended.

If this condition is established (Y in Step 1852), the automatic capacity deletion program 54 confirms current time, refers to the pool usage rate confirmation time and the pool usage rate confirmation hour threshold of the pool state management information 61, and judges whether elapsed time since the pool usage rate confirmation has been previously performed has exceeded the threshold (Step 1853). If the threshold is not exceeded (N in Step 1853), the processing is ended.

If the threshold is exceeded (Y in Step 1853), the automatic capacity deletion program 54 sets the current time as the pool usage rate confirmation time (Step 1854).

Next, the automatic capacity deletion program 54 judges whether or not the pool use requirements 65 can be retained while being satisfied after deletion of the capacity of the pool (Step 1855).

If the pool use requirements cannot be retained (N in Step 1855), the processing is ended. Such case may include, for example, a situation in which the minimum capacity of the pool is set but the capacity of the pool is too low.

If the pool use requirements can be retained (Y in Step 1855), the automatic capacity deletion program 54 refers to the pool management information 60 to select a VOL to be released from the pool (Step 1856). Requirements of the VOL to be released from the pool are such that, for example, it may be a free state pool VOL in which the pool usage rate exceeds the pool usage rate threshold (lower limit) by deleting this VOL, and in which the drive path number or RAID group number overlaps with other free state pool VOL. In addition, for example, a plurality of VOL to be releasedmay be selected from a pool.

Next, the automatic capacity deletion program 54 modifies the pool free region management information 63 (Step 1857). Specifically, for example, the automatic capacity deletion program 54 subtracts the total capacity of pool release target pool VOLs from the total free capacity, subtracts the number of pool release target pool VOLs from the number of free pool VOLs, and deletes registration of the pool release target pool VOLs from the free pool VOL number list.

Finally, the automatic capacity deletion program 54 modifies the pool state management information 61 (Step 1858). Specifically, for example, the automatic capacity deletion program 54 subtracts the total capacity of the pool release target pool VOLs from the total pool capacity, and deletes registration of the pool release target pool VOLs from the pool VOL number list.

Fig. 24 shows an example of a flow of processing performed by the data withdrawal program 55.

The data withdrawal program 55 is activated, for example, by the automatic capacity deletion program 54, as described above.

First of all, the data withdrawal program 55 restrains allocation of a new free state target VOL region in the pool-region-inside-pool group allocation management information 620 (Step 1900).

Next, the data withdrawal program 55 judges whether statuses of use in the entire regions of the free state target VOL have been confirmed or not (Step 1901).

If the statuses of use have been confirmed (Y in Step 1901), the data withdrawal program 55 reports to the automatic capacity deletion program 54, which is an activating source, that data withdrawal has ended (Step 1907).

If the statuses of use have not yet been confirmed (N in Step 1901), the data withdrawal program 55 refers to the allocation management table corresponding to the regions of the free state target VOLs (Step 1902).

Next, the data withdrawal program 55 judges whether the allocation management table is in use (Step 1903). If the allocation management table is not in use (N in Step 1903), Step 1901 is performed.

If the allocation management table is in use (Y in Step 1903), the data withdrawal program 55 causes valid data stored in the free state target VOLs to withdraw to a region other than the free state target VOLs of the pool group. For this reason, the data withdrawal program 55 first secures a free region of a VOL of the pool group other than the free state target VOLs (Step 1904).

Next, the data withdrawal program 55 causes the data to withdraw from regions of the free state target VOLs, in the newly secured region (Step 1905).

Next, the data withdrawal program 55 releases the allocation management table of the free state target VOLs (Step 1906). Thereafter, Step 1901 is returned.

The above is the explanation of an embodiment of the present invention. However, this explanation is merely an example for describing the present invention, and thus is not to limit the scope of the present invention to this embodiment. The present invention can be implemented in various other forms. For example, the configuration of the storage controller 20 shown in Fig. 2 is not limited to the configuration with the plurality of channel interfaces and drive interfaces, thus the configuration with, for example, one or a plurality of circuit boards having one or a plurality of CPUs and memories is possible. Further, the management information stored in the cache memory 205 may be stored in each local memory. Moreover, in the above embodiment, although a pool free region is added in VOL unit from the pool free region group 41 to each pool group 40, or deleted from same, addition or deletion may be performed in pool free region unit instead.

## Claims

1. A storage system, capable of communicating with one or a plurality of external devices which issue IO commands, the storage system comprising:
a plurality of storage control functions;
a pool having multiple pool regions which are storage regions dynamically allocated or released;
a plurality of virtual volumes which are a plurality of virtual storage devices which are recognized by the external devices and serve as destinations of the IO commands sent from the external devices; and
a storage controller which receives the IO commands sent from the external devices to the virtual volumes, allocates one or more pool regions inside the pool to the virtual volumes, and writes or reads data corresponding to the received IO commands with respect to the allocated one or more pool regions,
wherein the pool comprises a plurality of pool groups which are related to the plurality of storage control functions respectively, and a pool free region group,
each of the plurality of pool groups has a plurality of pool regions,
the pool free region group has a plurality of pool free regions which are pool regions dynamically allocated or released to any of the plurality of pool groups, and is a group common to the plurality of pool groups, and
the storage controller comprises a free allocation portion for allocating the pool free regions inside the common pool free region group to, of the plurality of pool groups, pool groups which satisfy a predetermined allocation condition.

2. The storage system according to claim 1, further comprising:
a storage area which can store a used upper limit which is an upper limit of a value related to capacity of storage capacities of the pool groups, the capacity being actually in use,
wherein, when a used value of a certain pool group of the plurality of pool groups exceeds the used upper limit stored in the storage area of the certain pool group, the free allocation portion allocates at least one pool free region to the certain pool group.

3. The storage system according to claim 1 or claim 2, wherein management on whether or not each of the pool regions in each of the pool groups is already allocated is performed as a separate operation from management of pool regions in other pool groups.

4. The storage system according to any one of claims 1 to 3, wherein the free allocation portion selects pool free regions to be allocated to the pool groups in accordance with a predetermined policy.

5. The storage system according to claim 4, wherein
the pool region is a storage region of a certain logical volume of a plurality of logical volumes which are set using physical storage resources that a plurality of RAID groups have,
each of the RAID groups comprises one or a plurality of disk drives,
each of the disk drives can be accessed from the storage controller via each drive path, and
the free allocation portion preferentially allocates pool free regions in the RAID groups and/or drive paths to pool groups, the pool free regions being different from the pool regions which are already allocated to the pool groups.

6. The storage system according to claim 5, wherein the free allocation portion preferentially searches and allocates pool free regions which are different from the allocated pool regions in terms of the drive paths, than pool free regions which are different from the allocated pool regions in terms of the RAID groups.

7. The storage system according to claim 4, wherein
the one or plurality of external devices are a host computer and an external storage system,
the external storage system also has pool regions,
the plurality of storage control functions include an IO processing function for dynamically allocating pool regions in accordance with an IO command from the host computer, and other storage control functions, and
the free allocation portion preferentially allocates pool free regions inside the storage system to pool groups which are related to the IO processing function, and preferentially allocates pool regions inside the external storage system as pool free regions to pool groups corresponding to the other storage control functions.

8. The storage system according to any one of claims 1 to 7, wherein the storage controller further comprises a pool region withdrawal portion for causing allocated pool regions to withdraw from a pool group of the plurality of pool groups, which satisfies a predetermined deletion condition, to the common pool free region group.

9. The storage system according to claim 8, further comprising a storage area which can store a used lower limit which is a lower limit of a value related to capacity of storage capacities of the pool groups, the capacity being actually in use, wherein, when a used value of a certain pool group of the plurality of pool groups is lower than the used lower limit stored in the storage area of the certain pool group, the pool region withdrawal portion causes at least one pool region to withdraw from the certain pool group to the pool free region group.

10. The storage system according to claim 9, wherein when the low value state lasts for a certain period of time, the pool region withdrawal portion causes at least one pool region to withdraw from the certain pool group to the pool free region group.

11. The storage system according to claim 8, wherein the pool region withdrawal portion moves data, which is stored in the pool region to be withdrawn, to other pool region inside the certain pool group.

12. The storage system according to any one of claims 1 to 11, wherein the plurality of storage control functions include a function which uses two or more virtual volumes of the plurality of virtual volumes, and different pool groups are related to the two or more virtual volumes respectively.

13. The storage system according to any one of claims 1 to 12, wherein the one or plurality of external devices include an external storage system, and the storage controller manages a storage region of the external storage system as a pool region of the storage system, and allocates the pool region of the external storage system to a certain pool group of the plurality of pool groups.

14. A storage control method, wherein, when there exist a pool having multiple pool regions which are storage regions dynamically allocated or released, and a plurality of virtual volumes which are a plurality of virtual storage devices recognized by external devices, which are communication partners, and serve as destinations of IO commands sent from the external devices, and when the pool comprises a plurality of pool groups which are related to a plurality of storage control functions respectively, and a pool free region group, each of the plurality of pool groups has a plurality of pool regions, and the pool free region group has a plurality of pool free regions which are pool regions dynamically allocated or released to any of the plurality of pool groups, and is a group common to the plurality of pool groups, the storage control method comprises the steps of:
receiving the IO commands sent from the external devices to the virtual volumes, allocating one or more pool regions inside the pool to the virtual volumes, and writing or reading data corresponding to the received IO commands with respect to the allocated one or more pool regions; and
allocating the pool free regions inside the common pool free region group to, of the plurality of pool groups, pool groups which satisfy a predetermined allocation condition.

15. The storage control method according to claim 14, wherein, when a used value of a certain pool group of the plurality of pool groups exceeds the used upper limit, which is an upper limit of a value related to capacity of storage capacities of the pool groups, the capacity being actually in use, at least one pool free region is allocated to the certain pool group.

16. The storage control method according to claim 14 or claim 15, wherein management on whether or not each of the pool regions in each of the pool groups is already allocated is performed as a separate operation from management of pool regions in other pool groups.

17. The storage control method according to any one of claims 14 to 16, wherein the pool free regions to be allocated to the pool groups are selected in accordance with a predetermined policy.

18. The storage control method according to any one of claims 14 to 17, wherein allocated pool regions are caused to withdraw from a pool group of the plurality of pool groups, which satisfies a predetermined deletion condition, to the common pool free region group.

19. The storage control method according to any one of claims 14 to 18, wherein the plurality of storage control functions include a function which uses two or more virtual volumes of the plurality of virtual volumes, and different pool groups are related to the two or more virtual volumes respectively.

20. A storage system, capable of communicating with one or a plurality of external devices which issue IO commands, the storage system comprising:
a plurality of storage control functions;
a pool having multiple pool regions which are storage regions dynamically allocated or released;
a plurality of virtual volumes which are a plurality of virtual storage devices which are recognized by the external devices and serve as destinations of the IO commands sent from the external devices; and
a storage controller which receives the IO commands sent from the external devices to the virtual volumes, allocates one or more pool regions inside the pool to the virtual volumes, and writes or reads data corresponding to the received IO commands with respect to the allocated one or more pool regions,
wherein the pool comprises a plurality of pool groups which are related to the plurality of storage control functions respectively, and a pool free region group,
each of the plurality of pool groups has a plurality of pool regions,
the pool free region group has a plurality of pool free regions which are pool regions dynamically allocated or released to any of the plurality of pool groups, and is a group common to the plurality of pool groups,
each RAID group comprises one or a plurality of disk drives,
each disk drive can be accessed from the storage controller via each drive path, and
the storage controller comprises:
a storage area which can store a used upper limit which is an upper limit of a value related to capacity of storage capacities of the pool groups, the capacity being actually in use, and a used lower limit which is a lower limit of a value related to capacity of storage capacities of the pool groups, the capacity being actually in use;
a free allocation portion which, when a used value of a certain pool group of the plurality of pool groups exceeds the used upper limit stored in the storage area of the certain pool group, preferentially searches, from the common pool free region group, pool free regions present in the RAID groups and/or drive paths, the pool free regions being different from the pool regions which are already allocated to the certain pool groups, and allocates the searched pool free regions to the certain pool groups; and
a pool region withdrawal portion which, when a used value of a certain pool group of the plurality of pool groups is lower than the used lower limit stored in the storage area of the certain pool group, moves data, which is stored in at least one pool region to be withdrawn, to other pool region inside the certain pool group, and causes the at least one pool region to withdraw from the certain pool group to the pool free region group.
